# EUROPEAN PATENT APPLICATION

(11) **EP 1 674 998 A2**
(43) Date of publication of application: **28.06.2006**
(21) Application number: 06006083.7
(22) Date of filing: 20.06.2003
(51) Int. Cl.: G06F 11/14, G06F 9/46

(54) **Information processing apparatus, information equipment, information processing system, automatic backup method, data transmission and reception method, automatic backup program, data transmission and reception program, and record medium having the programs recorded thereon**

(30) Priority: 21.06.2002 JP 2002181389; 21.06.2002 JP 2002181388; 21.06.2002 JP 2002181387
(62) Divisional of application: 03253920.7
(71) Applicant: SHARP KABUSHIKI KAISHA, Osaka-shi, Osaka 545-8522 (JP)
(72) Inventor: Shigeta, Daisuki, Nara-shi Nara 630-8227 (JP); Uno, Hiroshi, Nara-shi Nara 631-0022 (JP); Haneda, Isamu, Soraku-gun Kyoto 619-0225 (JP)
(74) Representative: Brown, Kenneth Richard

(57) **Abstract**

A PC is comprised of a processing device 1 which performs processings such as converting manipulated data into a human-comprehensible format or data updating according to entered information, a display device 3 which presents information such as images and sounds to the user, a storage device 4 which stores data temporarily converted into information such as data to be handled, images and sounds, and a connection device 5 which establishes connection with other PCs and PDAs via a connection medium such as the Internet or a USB cable. This configuration allows transfer of application data by a program capable of manipulating such data after its conversion into basic data and allows application data to be manipulated (worked with) even on PDAs lacking means for directly handling application data.

## Description

### BACKGROUND OF THE INVENTION

The present invention relates to an information processing apparatus designed to transmit and receive data in any of various forms such as backup data, image data or text data, and to information equipment, an information processing system, an automatic backup method, a data transmission and reception method, an automatic backup program, a data transmission and reception program, and a record medium having these programs recorded thereon.

Conventionally, when data used on a PC or other information equipment is manipulated on a PDA (Personal Digital Assistant) which runs on a system different from that of the information equipment, the object can be achieved by exchanging data itself if the data to be shared is directly manipulatable on the respective pieces of information equipment.

With the PDA mentioned here, user data is generally more likely to be damaged than with PCs or other information equipment due to absence of nonvolatile storage device and other restrictions. For this reason, PDA data is backed up to a PC as a countermeasure against such damage to user data. This processing is conventionally triggered by user operation conducted to synchronize data on the PC and the PDA.

Among conventional technologies are, for example, automatic backup methods (refer to Japanese Non-examined Patent Publication Nos. 4-295941, 7-160594 and 10-171693). With the conventional technologies of these backup methods, the backup start timing is determined by directly monitoring I/O processing information in the storage device.

However, provision of a backup device in the PDA for implementing the backup methods described in the Japanese Non-examined Patent Publication Nos. 4-295941, 7-160594 and 10-171693 degrades the PDA functionality, thus making it unfeasible. Therefore, it is necessary to be prepared for data damage by saving backup copies of data when the PDA is connected to a PC.

In general, when data on the PC and the PDA are synchronized, data is backed up to the PC. In this case, this method does not present any problem if data is always backed up when the PDA is connected to a PC; however, in any other applications, for example, if the PDA is used as a removable medium's adapter, backup is performed even when one wishes only to synchronize data, thus resulting in more useless processing time.

Note that among conventional technologies other than those designed for data backup in which data exchange is possible are that which equips the PDA with a program capable of directly manipulating Hypertext, by which it is possible to achieve the above object by transmitting Hypertext from the personal compute to the PDA when Hypertext is directly manipulated on the PC since Hypertext is also directly manipulatable on the PDA.

Note that, under this condition, there are some technologies in which data can be converted into that manipulatable by the receiving equipment, depending on the program running on the transmitting equipment.

Note also that among the other conventional technologies in which data exchange is possible are programs which convert Hypertext into image data on the PC and which display image data on the PDA. This allows the object to be accomplished by converting Hypertext into image data on the PC and then transmitting the data to the PDA even if the PDA cannot directly manipulate Hypertext.

Incidentally, some of the recent information equipment are equipped with a mechanism designed to allow data sharing between programs within a certain system. This mechanism is generally called clipboard. The image transfer method described in Japanese Non-examined Patent Publication No. 2002-84406 is an example of data transfer method using this clipboard.

This image transfer method is designed to copy the image displayed by a first program to a predetermined temporary storage area, extract the copy from the temporary storage area and transfer it to a second program. In this case, data is transferred between different programs within the same system using the clipboard.

More specifically, the first program informs the second program that it will transfer image data via the clipboard and then copies image data to the clipboard, after which the second program starts monitoring the clipboard after receipt of the notice and extracts image data from the clipboard when it confirms that image data has been copied to the clipboard.

Moreover, this image transfer method is also designed to allow image data transfer to other different information equipment via a network system by attaching the extracted data to email.

According to the image transfer method in the Japanese Non-examined Patent Publication No. 2002-84406, however, both the first program which is a transmitting program and the second program which is a receiving program must support image data transfer processings using the clipboard. Therefore, data transfer using the clipboard cannot be carried out with conventional functions alone unless such a new function is added.

Here, manipulated data is classified into two types in the present specification. That is, data is grouped under two categories; data such as image data and text data (hereinafter basic data) which is similarly manipulatable in different systems and data which is significantly meaningful for an extremely small number of programs but meaningless for other programs (hereinafter application data). In this case, it is necessary for any one piece of information equipment to support application data in order to share application data among pieces of information equipment running on different systems. For instance, it is necessary to perform a processing such as installing onto each piece of information equipment a program which supports application data or converting application data into basic data on the piece of information equipment which supports application data. That is, it has been impossible to manipulate application data without such a special processing.

Note that even when each piece of information equipment is capable of directly manipulating heavy and time-consuming data, if the transmitting information equipment differs in processing capability from the receiving information equipment; for example, if the receiving information equipment has lower processing capability than the transmitting information equipment and if application data is transmitted as is, then it takes too much time for the receiving information equipment to process application data. In such a case, conversion of application data into light and relatively less time-consuming basic data, which is manipulatable by both pieces of equipment, on the transmitting piece of equipment, for example, prior to transmission, ensures shorter processing time on the receiving information equipment.

The present invention was conceived in view of the above circumstances. It is therefore the object of the invention to provide an information processing apparatus designed to correctly and quickly transmit and receive data in any of various forms such as backup data, image data or text data in accordance with arbitrary settings, and to provide an information equipment, an information processing system, an automatic backup method, a data transmission and reception method, an automatic backup program, a data transmission and reception program, and a record medium having these programs recorded thereon.

### SUMMARY OF THE INVENTION

In order to achieve the above object, the present invention provides an information processing apparatus capable of exchanging data with other information equipment, the apparatus comprising detection means for detecting whether connection is established with the other information equipment, decision means for deciding the start of automatic backup, reception means for receiving backup data from the other information equipment, and storage means for storing backup data received from the other information equipment when the detection means detect connection with the other information equipment.

According to the present invention having such a feature, detection means monitor whether connection is established with other information equipment such as PDA.
And, when detection means detect that the PC, which is the information processing apparatus, and the PDA are connected and when the automatic backup time, determined by decision means, comes, reception means receive backup data from the PDA and backup data is stored on a storage device which is storage means. Thus, addition of the processings for monitoring connection status with the PDA and time intervals from the last backup time allows automatic backup of PDA data onto the PC which is not always connected.

In this case, the information processing apparatus may be configured such that automatic backup is not conducted when connection with other information equipment is not detected by detection means. This prevents useless automatic backup operation.

Moreover, storage means may delete backup data in excess of the maximum storable amount of data. This prevents backup data from increasing unlimitedly.

Additionally, the information processing apparatus may further comprise confirmation means for confirming whether backup data stored on storage means is to be transmitted to the other information equipment and transmission means for transmitting stored backup data to and restoring it on the information equipment when data is to be transmitted as a result of confirmation.

That is, when confirmation means confirm, as a result of a variety of operations such as pressing of a specific button on the PC or a specific key on the PDA, that the PC data is to be transmitted to the PDA, transmission means transmit backup data stored on the storage device to and restore it on the PDA. This allows damaged data to be restored by transmitting backup data from the PC even if PDA data is damaged.

In this case, confirmation means may select an arbitrary piece of backup data from among a plurality of pieces of backup data as backup data to be transmitted to the PDA. That is, since the latest data stored through automatic backup is not always correctly and automatically stored data, selection of a correctly and automatically stored piece of backup data from among a plurality of pieces of backup data allows correct restoration of data on the PDA.

Moreover, confirmation means may display the update date and time of each piece of data within backup data. Such display of update date and time of each piece of backup data stored on the storage device allows easy search for data to be restored.

Further, confirmation means may display each piece of data within backup data. Such display of each piece of data within backup data stored on the storage device allows easy search for data to be restored by checking it against update date and time.

Moreover, decision means may start automatic backup prior to transmission of data stored on storage means when confirmation means confirm that data stored on storage means is to be transmitted. For example, there is a case during data restoration in which the data to be restored is not the target data or the data to be restored is already damaged. Such problems can be resolved by storing PDA data onto the PC at that point in time prior to data restoration.

Additionally, setting means may further be provided which set time intervals for starting next automatic backup different from those for automatic backup if reception performed by reception means is interrupted. For example, time intervals sufficiently shorter than automatic backup time intervals are specified. This allows automatic backup to be restarted at the earliest possible timing in the event of automatic backup interruption and eliminates problems such as continuous interruption of automatic backup.

Moreover, arbitrary decision means may further be provided which are capable of arbitrarily deciding the start of backup aside from automatic backup. For instance, there is a case in which one wishes to store unchanged data at that point in time irrespectively of automatic backup as when one wishes to make substantial changes to data on the PDA. In such a case, use of arbitrary decision means makes it possible to execute the processings to be performed by automatic backup at an arbitrary timing, irrespectively of storage performed by the last automatic backup.

Additionally, data backed up by arbitrary decision means may remain undeleted even if the maximum storable amount of data in the storage means is exceeded. For example, although there is a case in which backup of data by arbitrary decision means is simply an advancement of automatic backup, there is also a case in which one wishes to retain data at that point in time on a semipermanent basis. For this reason, data backed up by arbitrary decision means is made immune to automatic data deletion even if the stored data count in the data storage area of the PC' s storage device exceeds the predetermined count. This ensures that data backed up by arbitrary decision means remains stored on a semipermanent basis unless it is deleted by the user's intention.

Moreover, display means may further be provided which, when detection means do not detect connection with other information equipment, show that automatic backup cannot be performed. Provision of such display means reliably informs the user that automatic backup cannot be carried out.

Additionally, instruction means may further be provided which, when detection means detect connection with other information equipment, instruct that information equipment be initialized. This ensures reliable initialization of information equipment prior to restoration. Further, an automatic backup start ON/OFF function may also be provided. This allows automatic backup to be arbitrarily turned ON or OFF.

Moreover, the information processing apparatus may be provided with detection means, decision means, reception means, storage means and transmission means, while the information equipment may be an information processing system in which all processing functions other than restoration are halted during restoration of received backup data. This ensures that restoration is reliably carried out and prevents failed restoration as a result of malfunction.

In order to achieve the above object, the present invention provides an automatic backup method in an information processing apparatus capable of exchanging data with other information equipment, the method comprising the steps of detecting whether connection is established with the other information equipment, deciding the start of automatic backup, receiving backup data from the other information equipment when automatic backup starts, and storing received backup data on storage means.

According to the present invention having such a feature, whether connection is established with other information equipment such as PDA is monitored, and when connection between the PC, which is the information processing apparatus, and the PDA is detected, backup data is received from the PDA when the automatic backup time comes, after which backup data is stored on a storage device which is storage means. Thus, addition of the processings for monitoring connection status with the PDA and time intervals from the last backup time allows automatic backup of PDA data onto the PC which is not always connected.

Note that the automatic backup method of the present invention can be realized as a computer-readable automatic backup program designed to implement this method. That is, the automatic backup program of the present invention is a computer-readable automatic backup program in an information processing apparatus capable of exchanging data with other information equipment, the program comprising the steps of detecting whether connection is established with the other information equipment, deciding the start of automatic backup, receiving backup data from the other information equipment when automatic backup starts, and storing received backup data on storage means. Note also that this automatic backup program can be provided as a computer-readable record medium having this program recorded thereon.

Moreover, in order to achieve the above obj ect, the present invention provides an information processing apparatus which is different from the above information processing apparatus of the invention and which is capable of transmitting image data to other information equipment, the apparatus comprising image data extraction means for extracting image data from the display screen, and transmission means for converting extracted image data into a format manipulatable by the other information equipment and transmitting data to the other information equipment.

According to the present invention having such a feature, image data extraction means extract image data displayed on the display screen. In this case, only the entire area displayed on the display screen or the entire area scrollable by the scroll bar or other method may be extracted. Transmission means convert image data thus extracted into a format manipulatable by other information equipment such as JPEG (Joint Photographic Experts Group) or DIB (Device Independent Bitmap) and transmit data to other information equipment. This allows other information equipment to manipulate (i.e., work with) extracted image data.

Moreover, the present invention provides an information processing apparatus capable of transmitting image data to other information equipment, comprising selection means for selecting a piece of image data from among a plurality of pieces of image data displayed on the display screen, image data extraction means for extracting the selected piece of image data, and transmission means for converting extracted image data into a format manipulatable by the other information equipment and transmitting data to the other information equipment.

According to the present invention having such a feature, the image data extraction means select an arbitrary window screen from the multi-window screen displayed on the display window. Transmission means convert window screen image data thus extracted into a format manipulatable by other information equipment such as JPEG or DIB and transmit data to other information equipment. This allows other information equipment to manipulate (i.e., work with) extracted image data.

Additionally, an information processing apparatus of the present invention is an information processing apparatus capable of transmitting image data to other information equipment, the apparatus comprising area specification means for specifying a display screen area from which image data is to be extracted, image data extraction means for extracting the specified area of image data, and transmission means for converting extracted image data into a format manipulatable by the other information equipment and transmitting data to the other information equipment.

According to the present invention having such a feature, area specification means specify a display screen area from which image data is to be extracted. For instance, means specify an appropriate area for the display screen size of the information equipment to which data is to be transmitted. In this case, the user may directly enter a desired area or select an area from among a plurality of available options. Data extraction means extract the thus specified area of image data.
Transmission means convert image data thus extracted into a format manipulatable by other information equipment such as JPEG or DIB and transmit data to other information equipment. This allows other information equipment to manipulate (i.e., work with) extracted image data.

Note that there is an area specification method by area specification means in which area specification is conducted by specifying start to end positions for extraction of image data displayed on the display screen. For instance, a rectangular area is specified by combining pressing and releasing of the mouse button. Moreover, a rectangular area with a fixed height and width having its starting point at an arbitrary position may be specified as another area specification method by moving the cursor with the mouse or other method and specifying that arbitrary position on the image data.

Moreover, according to the information processing apparatus of the present invention, detection means may be provided which detect whether connection is established with other information equipment. And, when detection means detect that no connection is established with other information equipment, image data extraction by image data extraction means is stopped, and image data transmission to other information equipment by transmission means is withheld. This prevents useless image data transmission.

Additionally, according to the information processing apparatus of the present invention, image data storage means for storing image data and detection means for detecting whether connection is established with other information equipment may be provided. And, when detection means detect that no connection is established with other information equipment, image data extracted by image data extraction means is stored on image data storage means. Here, memory medium such as HDD (hard disk drive), EEPROM or flash memory can be used as image data storage means. Then, when detection means detect that connection is established with other information equipment, image data stored on image data storage means is read, converted into a format manipulatable by other information equipment such as JPEG or DIB and transmitted. This prevents useless image data transmission and allows immediate image data transmission when it becomes possible to transmit data.

Moreover, according to the information processing apparatus of the present invention, image data storage means for storing image data and detection means for detecting whether connection is established with other information equipment may be provided. And, when detection means detect that no connection is established with other information equipment, image data extracted by image data extraction means is converted into a format manipulatable by other information equipment such as JPEG or DIB and stored on image data storage means such as HDD, EEPROM or flash memory. Then, when detection means detect that connection is established with other information equipment, image data stored on image data storage means, for example, in JPEG format is read and transmitted to other information equipment by transmission means. This prevents useless image data transmission and allows immediate image data transmission when it becomes possible to transmit data.

Additionally, according to the information processing apparatus of the present invention, display means may be provided which show whether connection is established with other information equipment. For example, an icon indicating whether connection is established is displayed in an area called the task tray on screen. This shows the user at a glance whether connection is established with other information equipment.

Moreover, according to the information processing apparatus of the present invention, confirmation means may be provided which confirm whether image data is to be transmitted to other information equipment. In this case, there are two possible confirmation timings by confirmation means.

The first case is that in which, if detection means detect that connection is established with other information equipment, confirmation means asks the user whether to transmit image data. And, if the user chooses to transmit data in response to this confirmation, image data stored in advance on image data storage means is read, converted into a format manipulatable by other information equipment such as JPEG or DIB and transmitted by transmission means. Or, if the user chooses to transmit data in response to this confirmation, image data, converted in advance into a format manipulatable by other information equipment such as JPEG or DIB and stored on image data storage means, is read and transmitted as is to other information equipment by transmission means.

The second case is that in which, if no connection is established with other information equipment when a transmission request is made, confirmation means confirm whether image data is to be transmitted after establishment of connection. And, if the user chooses to transmit data in response to this confirmation after establishment of connection, image data extracted by image data extraction means is stored on image data storage means. Then, when detection means detect that connection is established with other information equipment, image data stored on image data storage means is read, converted into a format manipulatable by other information equipment such as JPEG or DIB and transmitted by transmission means. Or, if the user chooses to transmit data in response to this confirmation after establishment of connection, image data extracted by image data extraction means is converted into a format manipulatable by other information equipment such as JPEG or DIB and stored on image data storage means. Then, when the detection means detect that connection is established with other information equipment, image data stored on the image data storage means is read and transmitted as is to other information equipment by transmission means.

Thus, asking the user in advance whether to transmit image data prevents useless transmission not based on the user's intention and allows immediate image data transmission when it becomes possible to transmit data.

Moreover, according to the information processing apparatus of the present invention, display means may be provided which show that there is untransmitted image data stored on image data storage means. For instance, an icon indicating whether there is untransmitted image data is displayed in an area called the task tray on screen. This shows the user at a glance that there is untransmitted image data stored on image data storage means.

Additionally, according to the information processing apparatus of the present invention, attachment means may be provided which attach extra information to image data extracted by image data extraction means. Date, index title and arbitrarily attached index information is among information attached by attachment means. In this case, extra information may be attached when image data is transmitted by transmission means or when image data is stored on image data storage means. Transmission of image data after attachment of these pieces of information allows easy search for target image data from numerous pieces of image data on the information equipment to which image data will be transmitted.

Moreover, according to the information processing apparatus of the present invention, means may be provided such as condition addition means which add image data extraction conditions to image data extracted by image data extraction means, storage location specification means which specify a location for storing image data and storage format specification means which specify a format for storing image data. In this case, data showing added conditions, specified storage location and specified storage format may be added to image data when image data is transmitted by transmission means or when image data is stored on image data storage means. Transmission of image data after addition of these pieces of information allows more flexible manipulation of image data on the information equipment to which image data will be transmitted.

Additionally, according to the information processing apparatus of the present invention, storage format specification means which specify a storage format for image data extracted by image data extraction means and compression ratio setting means which set a compression ratio if the specified storage format is compressible may be provided. In this case, transmission means transmit image data extracted at the set compression ratio and data indicating the specified storage format to other information equipment. Moreover, image data storage means store image data extracted at the set compression ratio and data indicating the specified storage format. Thus, reduction of image data size by changing its compression ratio allows more image data to be stored on the information equipment to which image data will be transmitted.

Moreover, according to the information processing apparatus of the present invention, transmission means may be a record medium, and image data may be transmitted by passing this record medium from the information processing apparatus to other information equipment. That is, data exchange between the information processing apparatus such as PC and other information equipment such as PDA may be accomplished, for example, by exchanging data over a physical cable connecting them or through wireless signal transfer; in addition to these, data exchange can also be accomplished by passing nonvolatile memory commonly usable for both PC and PDA such as CF (Compact Flash) memory card.

Additionally, in order to achieve the above object, the present invention provides other information equipment capable of receiving image data transmitted from an information processing apparatus after conversion into a manipulatable format, the equipment comprising reception means for receiving the image data, storage means for storing image data received by the reception means, detection means for detecting that image data has been received by the reception means, and display means for displaying image data detected by the detection means.

According to the present invention having such a feature, when image data is received by reception means and received data stored on storage means, detection means detect that image data has been received, and this detection acts as a trigger, displaying received data on display means. This ensures that the user is informed on other information equipment which has received image data that image data reception is complete and allows immediate confirmation of the received image data contents. In this case, detection means may detect image data reception based on change in the number of files stored in storage means. Moreover, storage means need only store image data received by reception means in a specified folder. Further, storage means may store image data received by reception means in the folder specified by file format. This facilitates image data file management and limits the number of files stored in each folder.

Additionally, in order to achieve the above object, the present invention provides another information processing system which is different from the above information processing system of the invention and which is comprised of an information processing apparatus and other information equipment capable of receiving image data transmitted from an information processing apparatus after conversion into a manipulatable format, the other information equipment comprising instruction means for instructing the information processing apparatus to receive the image data, the information processing apparatus comprising transmission means for transmitting the image data to the other information equipment based on instruction from the instruction means.

According to the present invention having such a feature, other information equipment such as PDA can make a request for image data transmission to information processing apparatus such as PC.

Additionally, in order to achieve the above object, the present invention provides a data transmission method for transmitting image data from an information processing apparatus to other information equipment, the method comprising the steps of extracting image data from the display screen in response to a transmission request, converting extracted image data into a format manipulatable by other information equipment, and transmitting the converted image data.

According to the present invention having such a feature, image data displayed on the display screen is extracted by user transmission request. In this case, only the entire area displayed on the display screen or the entire area scrollable by the scroll bar or other method may be extracted. And, image data thus extracted is converted into a format manipulatable by other information equipment such as JPEG or DIB and transmitted to other information equipment. This allows other information equipment to manipulate (i.e., work with) extracted image data.

Moreover, the present invention provides a data transmission method for transmitting image data from an information processing apparatus to other information equipment, the method comprising the steps of selecting a piece of image data from among a plurality of pieces of image data displayed on the display screen in response to a transmission request, extracting the selected piece of image data, converting the extracted image data into a format manipulatable by other information equipment, and transmitting the converted image data.

According to the present invention having such a feature, an arbitrary window screen is selected from the multi-window screen displayed on the display window by user transmission request. And, window screen image data thus extracted is converted into a format manipulatable by other information equipment such as JPEG or DIB and transmitted to other information equipment. This allows other information equipment to manipulate (i.e., work with) extracted image data.

Moreover, the present invention provides a data transmission method for transmitting image data from an information processing apparatus to other information equipment, the method comprising the steps of specifying a display screen area from which image data is to be extracted in response to a transmission request, extracting the specified area of image data, converting extracted image data into a format manipulatable by other information equipment, and transmitting converted image data.

According to the present invention having such a feature, a display screen area from which image data is to be extracted is specified in response to a transmission request. For example, an appropriate area is specified for the display screen size of the information equipment to which data is to be transmitted. In this case, the user may directly enter a desired area or select an area from among a plurality of available options. And, the area of image data thus specified is extracted, converted into a format manipulatable by other information equipment such as JPEG or DIB and transmitted to other information equipment. This allows other information equipment to manipulate (i.e., work with) extracted image data.

Additionally, the present invention provides a data transmission method for transmitting image data from an information processing apparatus to other information equipment, the method comprising the steps of specifying a display screen area from which image data is to be extracted, extracting the specified area of image data and converting it into a format manipulatable by other information equipment, storing converted image data on image data storage means, and reading image data stored on image data storage means and transmitting the image data to other information equipment in response to a transmission request.

According to the present invention having such a feature, a display screen area from which image data is to be extracted is specified. For example, an appropriate area is specified for the display screen size of the information equipment to which data is to be transmitted. In this case, the user may directly enter a desired area or select an area from among a plurality of available options. And, the area of image data thus specified is extracted, converted into a format manipulatable by other information equipment such as JPEG or DIB and stored on image data storage means. Then, image data stored on image data storage means is read and transmitted as is to other information equipment by user transmission request. This allows other information equipment to manipulate (i.e., work with) extracted image data.

Additionally, the present invention provides a data transmission method for transmitting image data from an information processing apparatus to other information equipment, the method comprising the steps of extracting image data from the display screen and converting it into a format manipulatable by the other information equipment in response to a transmission request, detecting whether connection is established with the other information equipment, storing the converted image data on image data storage means when no connection is established with other information equipment, and reading the image data stored on image data storage means and transmitting the image data to other information equipment when establishment of connection with other information equipment is detected.

According to the present invention having such a feature, image data is extracted from the display screen and converted into a format manipulatable by other information equipment such as JPEG or DIB in response to a transmission request. And, image data converted into JPEG or DIB is stored on the image data storage means when no connection is established with other information equipment. Then, when establishment of connection with other information equipment is detected, image data stored on image data storage means is read and transmitted as is to other information equipment by transmission means. This prevents useless image data transmission and allows immediate image data transmission when it becomes possible to transmit data.

Moreover, the present invention provides a data transmission method for transmitting image data from an information processing apparatus to other information equipment, the method comprising the steps of extracting image data from the display screen and converting it into a format manipulatable by the other information equipment in response to a transmission request, detecting whether connection is established with the other information equipment, storing the converted image data on image data storage means when no connection is established with other information equipment, confirming whether to transmit image data when establishment of connection with other information equipment is detected, and reading the image data stored on image data storage means and transmitting the image data to other information equipment if image data is to be transmitted as a result of confirmation.

According to the present invention having such a feature, image data is extracted from the display screen and converted into a format manipulatable by other information equipment such as JPEG or DIB in response to a transmission request. And, converted image data is stored on image data storage means when no connection is established with other information equipment. Then, when establishment of connection with other information equipment is detected, the user is asked whether to transmit image data. As a result, if the user chooses to transmit data, image data stored on image data storage means is read and transmitted as is to other information equipment. Thus, asking the user in advance whether to transmit image data prevents useless transmission not based on the user's intention and allows immediate image data transmission when it becomes possible to transmit data.

Moreover, the present invention provides a data transmission method for transmitting image data from an information processing apparatus to other information equipment, the method comprising the steps of extracting image data from the display screen and converting it into a format manipulatable by the other information equipment in response to a transmission request, detecting whether connection is established with the other information equipment, confirming whether to store the converted image data on the image data storage means when no connection is established with other information equipment, storing the converted image data on image data storage means if, as a result of confirmation, data is to be stored, and reading the image data stored on image data storage means and transmitting the image data to other information equipment when establishment of connection with other information equipment is detected.

According to the present invention having such a feature, image data is extracted from the display screen and converted into a format manipulatable by other information equipment such as JPEG or DIB in response to a transmission request. Next, whether connection is established with other information equipment is detected, and then whether to store converted image data on image data storage means is confirmed when no connection is established with other information equipment. If the user chooses to transmit data in response to this confirmation, converted image data is stored on image data storage means. Then, when establishment of connection with other information equipment is detected, image data stored on image data storage means is read and transmitted as is to other information equipment. Thus, asking the user in advance whether to store image data prevents useless transmission not based on the user's intention and allows immediate image data transmission when it becomes possible to transmit data.

Additionally, the present invention allows the data transmission method to be realized as a computer-readable data transmission program designed to implement this method. Moreover, this data transmission program can be provided as a computer-readable record medium having this program recorded thereon.

Additionally, in order to achieve the above object, the present invention provides a data reception method for other information equipment to receive image data transmitted from an information processing apparatus after conversion into a manipulatable format, the method comprising the steps of receiving image data, storing received image data in a specified folder, detecting image data reception based on change in the number of files stored in the folder, and displaying detected image data.

According to the present invention having such a feature, received image data is stored in the specified folder and image data reception detected, and this detection acts as a trigger, displaying received image data on display means. This ensures that the user is informed on other information equipment which has received image data that image data reception is complete and allows immediate confirmation of the received image data contents.

Moreover, the present invention allows the data reception method to be realized as a computer-readable data reception program designed to implement this method. Additionally, this data reception program can be provided as a computer-readable record medium which has recorded this program.

In order to achieve the above object, the present invention provides another information processing apparatus which is different from the above information processing apparatus of the invention and which is capable of transmitting text data to other information equipment, the another information processing apparatus comprising text data extraction means for extracting text data from display screen's on-screen data, text data storage means for storing extracted text data, and transmission means for extracting text data by the text data extraction means through selection of the display screen's on-screen data, storing the text data on the text data storage means and transmitting the text data to the other information equipment.

According to the present invention having such a feature, text data extraction means extract text data from the display screen's on-screen data. In this case, only the entire area displayed on the display screen or the entire area scrollable by the scroll bar or other method may be extracted. Text data thus extracted is stored on text data storage means. Transmission means transmit text data thus extracted and stored on text data storage means to other information equipment. This allows other information equipment to handle extracted text data.

Additionally, the present invention provides an information processing apparatus capable of transmitting text data to other information equipment, the apparatus comprising area specification means for specifying an on-screen data area from which text data is to be extracted, text data extraction means for extracting the specified area of text data from on-screen data, text data storage means for storing extracted text data, and transmission means for extracting text data from the specified area by the text data extraction means through specification of an area within the on-screen data by the area specification means, storing the text data on the text data storage means and transmitting the text data to the other information equipment.

According to the present invention having such a feature, area specification means specify an on-screen data area from which text data is to be extracted. For example, an appropriate area is specified for the display screen size of the information equipment to which data is to be transmitted. In this case, the user may directly enter a desired area or select an area from among a plurality of available options. Text data whose area is thus specified is extracted by text data extraction means and stored on text data storage means. The transmission means transmit text data thus stored on text data storage means to other information equipment. This allows other information equipment to manipulate extracted text data.

Note that text data extracted by text data extraction means is extracted along with Hypertext data if Hypertext data is included in on-screen data.

Moreover, text data extraction means extract text data using the clipboard and store it on text data storage means. Copying of text data to the clipboard is often realized by pressing the Ctrl and C keys simultaneously as long as a Windows (registered trademark of Microsoft; hereafter the same) program is used. For this reason, it becomes possible for text data extraction means for copying selected text data to the clipboard by bringing about the same condition as this key operation internally in the form of a program. Then, text data need only be extracted from the clipboard and stored on text data storage means.

Note that there is an area specification method by area specification means in which area specification is conducted by specifying start to end positions for extraction of on-screen data displayed on the display screen. For instance, a rectangular area is specified by combining pressing and releasing of the mouse button. Moreover, a rectangular area with fixed height and width having its starting point at an arbitrary position may be specified as another area specification method by moving the cursor with the mouse or other method and specifying that arbitrary position on the image data.

Moreover, according to an information processing apparatus of the present invention, detection means may be provided which detect whether connection is established with other information equipment. And, when detection means detect that no connection is established with other information equipment, text data extracted by text data extraction method is stored on text data storage means. Here, memory medium such as HDD, EEPROM or flash memory can be used as text data storage means. Then, when detection means detect that connection is established with other information equipment, text data stored on text data storage means is read and transmitted to other information equipment by transmission means. This prevents useless text data transmission and allows immediate text data transmission when it becomes possible to transmit data.

Additionally, according to an information processing apparatus of the present invention, attachment means may be provided which attach extra information to text data extracted by text data extraction means. Date, index title and arbitrarily attached index information is among information attached by attachment means. In this case, extra information may be attached when text data is transmitted by transmission means or when text data is stored on text data storage means. Transmission of text data after attachment of these pieces of information allows easy search for target text data from numerous pieces of text data on the information equipment to which text data will be transmitted.

Moreover, according to an information processing apparatus of the present invention, means may be provided such as condition addition means which add text data extraction conditions to text data extracted by text data extraction means and storage location specification means which specify a location for storing text data. In this case, data showing added conditions and specified storage location may be added to text data when text data is transmitted by transmission means or when text data is stored on text data storage means.
Transmission of text data after addition of these pieces of information allows more flexible manipulation of text data on the information equipment to which image data will be transmitted.

Moreover, according to an information processing apparatus of the present invention, transmission means may be a record medium, and text data may be transmitted by passing this record medium from the information processing apparatus to other information equipment. That is, data exchange between the information processing apparatus such as PC and other information equipment such as PDA can be accomplished, for example, by a physical cable connecting them or by conveying wireless signal; in addition to these, data exchange can also be accomplished by passing nonvolatile memory commonly usable for both the PC and PDA such as CF memory card.

Additionally, in order to achieve the above object, the present invention provides information equipment which is different from the above information equipment of the invention and which is capable of receiving text data from an information processing apparatus, the information equipment comprising reception means for receiving the text data, storage means for storing text data received by the reception means, detection means for detecting text data reception by the reception means, and display means for displaying text data detected by the detection means.

According to the present invention having such a feature, when text data is received by reception means and text data received by reception means is stored, detection means detect text data reception, and this detection acts as a trigger, displaying received text data on display means. This ensures that the user is informed on other information equipment which has received text data that text data reception is complete and allows immediate confirmation of the received text data contents.

In this case, detection means may detect whether text data has been received based on change in the number of files stored in storage means. This ensures reliable detection of text data reception.

Additionally, in order to achieve the above object, the present invention provides an information processing system which is different from the above information processing system of the invention and which is comprised of an information processing apparatus and other information equipment capable of receiving text data from this information processing apparatus, the other information equipment comprising instruction means for instructing the information processing apparatus to receive the text data, the information processing apparatus comprising transmission means for transmitting the text data to the other information equipment based on instruction from the instruction means.

According to the present invention having such a feature, other information equipment such as PDA can request the information processing apparatus such as PC to transmit text data.

Additionally, in order to achieve the above object, the present invention provides a data transmission method which is different from the above data transmission method of the invention and for transmitting text data from an information processing apparatus to other information equipment, the method comprising the steps of extracting text data from the display screen's on-screen data, storing extracted text data on text data storage means, and transmitting text data stored on text data storage means to other information equipment.

According to the present invention having such a feature, text data is extracted from the display screen's on-screen data by user transmission request. In this case, only the entire area displayed on the display screen or the entire area scrollable by the scroll bar or other method may be extracted. And, text data thus extracted is stored on text data storage means and transmitted to other information equipment. This allows other information equipment to manipulate extracted text data.

Moreover, the present invention provides a data transmission method for transmitting text data from an information processing apparatus to other information equipment, the method comprising the steps of specifying an on-screen data area from which text data is to be extracted, extracting the specified area of text data from on-screen data, storing extracted text data on text data storage means, and transmitting text data stored on text data storage means to other information equipment.

According to the present invention having such a feature, an on-screen data area from which text data is to be extracted from the display screen is specified in response to a transmission request. For example, an appropriate area is specified for the display screen size of the information equipment to which data is to be transmitted. In this case, the user may directly enter a desired area or select an area from among a plurality of available options. And, the area of text data thus specified is extracted, stored on text data storage means and transmitted to other information equipment. This allows other information equipment to manipulate extracted text data.

Moreover, the present invention allows the data transmission method to be realized as a computer-readable data transmission program designed to implement this method. Additionally, this data transmission program can be provided as a computer-readable record medium having this program recorded thereon.

Additionally, in order to achieve the above object, the present invention provides a data reception method which is different from the above data reception method of the invention and for other information equipment to receive text data from an information processing apparatus, the method comprising the steps of receiving transmitted text data, storing received text data in a specified folder, detecting text data reception based on change in the number of files stored in the folder, and displaying the detected text data.

According to the present invention having such a feature, received text data is stored in the specified folder and text data reception is detected, and this detection acts as a trigger, displaying received text data on display means. This ensures that the user is informed on other information equipment which has received text data that text data reception is complete and allows immediate confirmation of the received text data contents.

Moreover, the present invention allows the data reception method to be realized as a computer-readable data reception program designed to implement this method. Additionally, this data reception program can be provided as a computer-readable record medium recording this program.

### BRIEF DESCRIPTION OF THE DRAWINGS

Fig. 1 is a functional block diagram schematically showing data exchangeable connection between a PC which is an information processing apparatus and a PDA which is other information equipment according to embodiment 1 of the present invention described below.

Fig. 2 is a flowchart showing the automatic backup procedure in embodiment 1.

Fig. 3 is a flowchart showing the restoration procedure in embodiment 1.

Fig. 4 is an explanatory diagram showing an example of setting screen for items used for automatic backup and restoration in embodiment 1.

Fig. 5 is an explanatory diagram showing an example of backup data contents displayed during restoration in embodiment 1.

Fig. 6 is an explanatory diagram showing the timing relationship when automatic backup is interrupted in embodiment 1.

Fig. 7 is a flowchart showing the automatic backup procedure during restoration in embodiment 1.

Fig. 8 is an explanatory diagram showing an example of menu display when the PC and the PDA according to embodiment 1 are connected to each other.

Fig. 9 is an explanatory diagram showing an example of menu display when the PC and the PDA according to embodiment 1 are not connected to each other.

Fig. 10 is a flowchart showing the procedure from issuance of restoration start instruction to actual data transmission to the PDA in embodiment 1.

Fig. 11 is an explanatory diagram showing an example of setting screen for specifying whether to perform automatic backup in embodiment 1.

Fig. 12 is an explanatory diagram showing an example of Hypertext stored on a storage device according to embodiment 2 described later or obtained from other equipment through a connection network such as the Internet.

Fig. 13 is an explanatory diagram showing Hypertext processed and displayed such that it is human-viewable in embodiment 2.

Fig. 14 is an explanatory diagram showing a plurality of windows displayed on screen in embodiment 2.

Fig. 15 is an explanatory diagram showing an example of transmission data in embodiment 2.

Fig. 16 is an explanatory diagram showing an example of transmission data in embodiment 2.

Fig. 17 is an explanatory diagram showing an example of displaying other systems' restrictions on screen in embodiment 2.

Fig. 18 is an explanatory diagram showing an example of rectangular area setting screen in embodiment 2.

Figs. 19(a) and 19(b) are explanatory diagrams showing examples of graphics displaying whether the PC and the PDA according to embodiment 2 are connected to each other, while Fig. 19(c) is an example of graphics displaying whether there is untransmitted data.

Fig. 20 is an explanatory diagram showing an example of additional information in embodiment 2.

Fig. 21 illustrates an explanatory diagram showing an example of result of image file transmission with a plurality of pieces of additional information in embodiment 2.

Fig. 22 is an explanatory diagram showing a decision method for processings on the PDA according to embodiment 2.

Fig. 23 is an explanatory diagram showing methods for selecting a storage format and image compression ratio in embodiment 2.

Fig. 24(a) is an explanatory diagram showing an example of image data obtained when the image size is increased, while Fig. 24 (b) is an example of image data obtained when the image size is reduced in embodiment 2.

Figs. 25 (a) to 25 (c) are explanatory diagrams showing an example of extracting text data from the text editor in embodiment 2.

Fig. 26 is an explanatory diagram showing an example of extracting text data from the browser in embodiment 2.

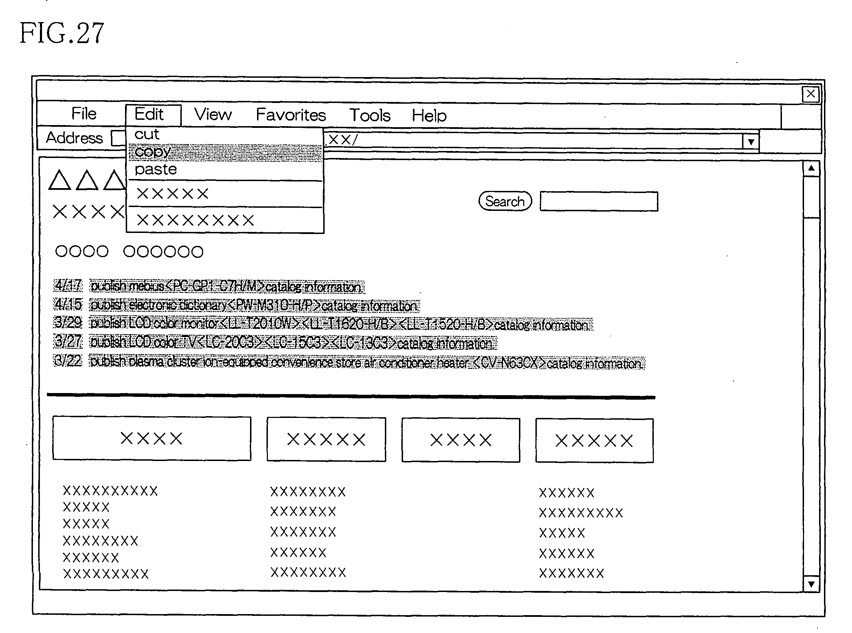

Fig. 27 is an explanatory diagram showing an example of means for loading text data into the clipboard in embodiment 2.

Fig. 28 is an explanatory diagram showing an example of image capture setting screen for extracting data under various conditions from the display device of the PC according to embodiment 2.

Fig. 29 is an explanatory diagram showing an example of IP address setting screen for information equipment with which connection is to be established in embodiment 2.

Fig. 30 is an explanatory diagram showing an example of data appearing on the PDA display transmitted from the PC according to embodiment 2.

Fig. 31 is an explanatory diagram showing an example of folder configuration of the PDA according to embodiment 2.

Fig. 32 is an explanatory diagram showing the processing flow when transmission occurs in response to a transmission request made as a result of operation of the PDA according to embodiment 2.

Fig. 33 is an explanatory diagram showing an example of device configuration when data is transmitted using a memory card as the connection device in embodiment 2.

Fig. 34 is a flowchart showing the procedure for creating data to be viewed on the PDA from Hypertext in embodiment 2.

Fig. 35 is a flowchart showing the procedure for directly extracting data from the display device according to embodiment 2 and transmitting the data to the PDA.

Fig. 36 is a flowchart showing the user operation procedure for transmitting the entire screen in embodiment 2.

Fig. 37 is a flowchart showing the user operation procedure for transmitting only the window displayed by the program displaying Hypertext in embodiment 2.

Fig. 38 is a flowchart showing the user operation procedure for transmitting data to the PDA after area specification in embodiment 2.

Fig. 39 is a flowchart showing the user operation procedure for specifying an area in advance before data transmission to the PDA in embodiment 2.

Fig. 40 is a flowchart showing the user operation procedure for displaying other systems' restrictions on screen in embodiment 2.

Fig. 41 is a flowchart showing the procedure for not transmitting data when no connection is established in embodiment 2.

Fig. 42 is a flowchart showing the procedure for storing data when no connection is established and automatically transmitting the data when connection is established in embodiment 2.

Fig. 43 is a flowchart showing the procedure for storing data when no connection is established and transmitting the data after confirmation as to whether to transmit the data when connection is established in embodiment 2.

Fig. 44 is a flowchart showing the procedure for first deciding whether to store data after confirming whether to transmit the data after establishment of connection when no connection is established and transmitting the stored data when connection is established in embodiment 2.

Fig. 45 is a flowchart showing the procedure on the PDA side when data is transmitted from the PC according to embodiment 2.

Fig. 46 is a flowchart showing the procedure on the PC side for extracting on-screen data from the PC as a result of input from the PDA according to embodiment 2.

Fig. 47 is a flowchart showing the procedure on the PDA side for extracting on-screen data from the PC as a result of input from the PDA according to embodiment 2.

Fig. 48 is a flowchart showing the procedure for transmitting data to the PDA by using a memory card as a medium in embodiment 2.

Fig. 49 is a flowchart showing the procedure for creating data to be viewed on the PDA from Hypertext in embodiment 3.

Fig. 50 is a flowchart showing the procedure for directly extracting data from the display device according to embodiment 3 and transmitting the data to the PDA.

### DESCRIPTION OF THE PREFERRED EMBODIMENTS

Individual embodiments of the present invention are described below by referring to the drawings.

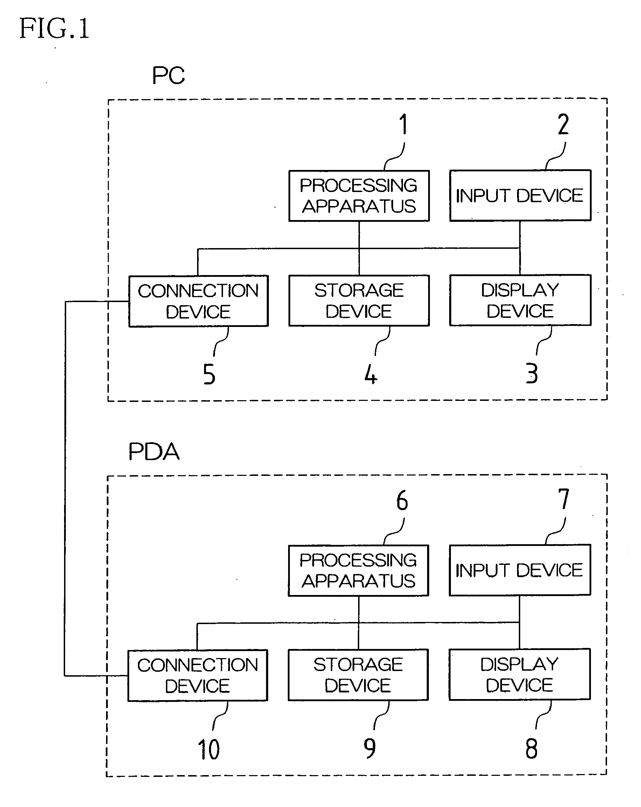

<Embodiment 1>
Fig. 1 illustrates a functional block diagram schematically showing an information processing system in which a PC which is an information processing apparatus and a PDA which is other information equipment according to embodiment 1 of the present invention are connected such that they can exchange data with each other. Here, it is assumed that PDA data is backed up to the PC.

The PC is comprised of a processing device 1 which performs processings according to user operations and determines backup timing, an input device 2 such as keyboard or mouse which accepts user operations, a display device 3 which presents information such as images and sounds to the user, a storage device 4 which stores various data such as images and sounds and data backed up from the PDA and a connection device 5 which establishes connection with other information equipment such as PDA via a connection medium such as the Internet or USB cable.

Moreover, the PDA shown in Fig. 1 is comprised of a processing apparatus 6 which performs requested processings according to user operations, an input device 7 which accepts user operations, a display device 8 which presents information such as images and sounds to the user, a storage device 9 which stores information received from other PCs and PDAs and internally temporarily converted data and a connection device 10 which establishes connection with other PCs and PDAs.

Next, the processings, performed in the PC and the PDA having the configurations, for automatically backing up PDA data to the PC and those for transmitting backed-up data to the PDA and restoring it the PDA are described.

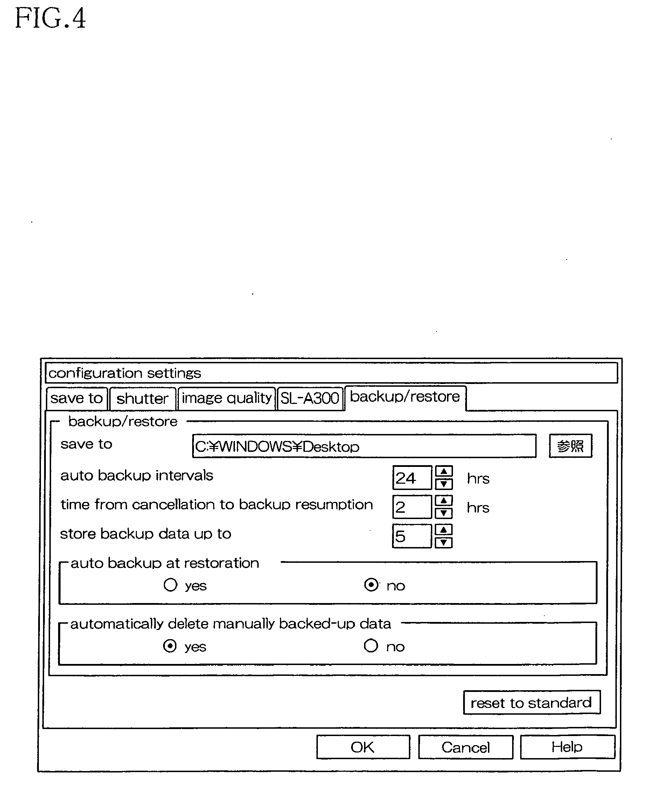

With the PC and the PDA currently connected via the connection devices 5 and 10, it is assumed that an automatic backup program is running on the PC which monitors whether the PDA data storage processing starts. Note that it is also assumed that time intervals for automatic backup and the maximum amount of data to be automatically backed up are specified by the user in advance using a screen as shown in Fig. 4.

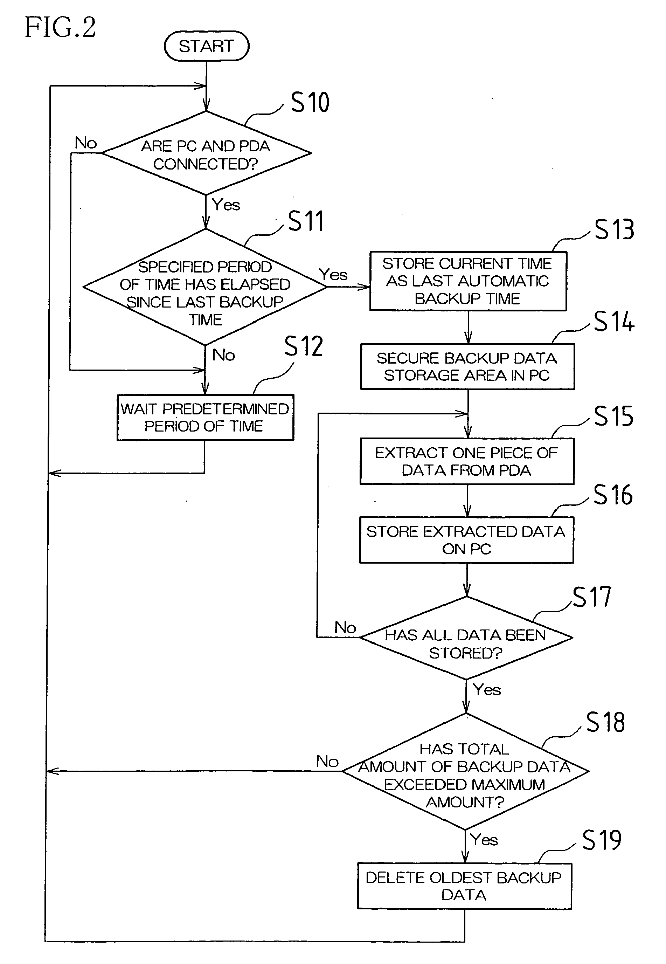

Next, the processings for automatically backing up PDA data to the PC under this condition are described by referring to the flowchart shown in Fig. 2.

When the automatic backup program runs on the PC, the program first checks whether the PDA is connected (Step S10). As a result, if the PDA is not connected (if No is answered in Step S10), the operation proceeds to Step S12 where no processings are performed for a predetermined amount of time and the operation returns to Step S10 after this time period elapses where a confirmation is made again as to whether the PDA is connected.

On the other hand, when the PDA is connected (when Yes is answered in Step S10), a confirmation is made next as to whether a specified period of time has elapsed since the last automatic backup time (Step S11). This specified period of time refers to the time intervals for automatic backup specified in advance by the user.

When the specified period of time has not elapsed (if No is answered in Step S11), the processing remains in a standby state where no processings are performed for a predetermined amount of time (Step S12) and then the operation returns to Steps S10 and S11 where confirmations are made as to whether the PDA is connected and whether the specified period of time has elapsed.

As a result, when the specified period of time has elapsed (when Yes is answered in Step S11), the current time is stored on the storage device 4 of the PC as the last backup time (Step S13) first. Next, an area is secured on the storage device 4 of the PC for backing up data stored on the storage device 9 of the PDA (Step S14).

Then, data is extracted from the storage device 9 of the PDA via the connection devices 10 and 5 (Step S15). And, extracted data is stored in the area previously secured within the storage device 4 (Step S16). Backup is complete when extraction of all data from the storage device 9 of the PDA and storage of such data on the storage device 4 are terminated (until Yes is answered in Step S17).

Here, as backup progresses, data to be backed up continues to increase within the storage device 4. To prevent unlimited increase in backup data, therefore, the PC deletes backup data in excess of the specified amount.

As a deletion method, the amount of stored data and the user-specified maximum backup amount are compared to determine whether the amount of stored data exceeds the maximum backup amount (Step S18). As a result, when the amount of stored data exceeds the maximum backup amount (when Yes is answered in Step S18), the oldest stored data is deleted (Step S19). On the other hand, when the amount of stored data does not exceed the maximum backup amount, no processings are performed.

Thus, when a series of automatic backup processings are complete, the operation returns to Steps S10 and S11 where confirmations are resumed as to whether the PDA is connected and whether the specified period of time has elapsed.

Note that among other possible embodiments are that in which the PDA connection time is stored and decision is made as to whether to perform automatic backup by comparing this PDA connection time and the last automatic backup time.

The automatic backup flow is as discussed above.

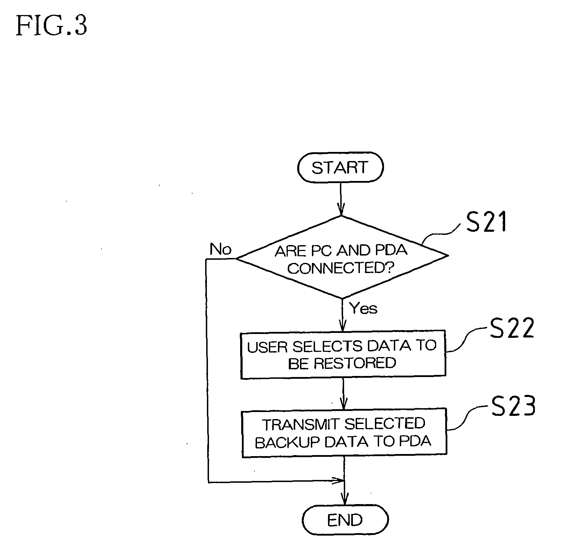

Next, the processing for restoring data stored by the automatic backup in the event of damage to the PDA data are described by referring to the flowchart shown in Fig. 3.

Restoration starts by user instruction obtained via the input device 2 of the PC or the input device 7 of the PDA. Pressing of a specific key on the PC, pressing of a button on the display device 3 using a pointing device such as the mouse, pressing of a specific key on the PDA and pressing of a button on the display device 3 of the PDA are among various possible input methods.

When restoration starts by any of these methods, a confirmation is made first as to whether the PDA is connected (Step S21). As a result, if the PDA is not connected (if No is answered in Step S21), restoration is terminated without performing any processing since restoration is not possible.

On the other hand, when the PDA is connected (when Yes is answered in Step S21), the user specifies (selects) the data to be restored next (Step S22). The reason for this is that it is necessary to have the user specify the data to be truly restored from among a plurality of pieces of backup data stored automatically on the storage device 4 of the PC. That is, there is a possibility that the latest stored data may not always be correctly and automatically backed-up data. For this reason, the storage device 4 of the PC is designed to be able to always store a plurality of pieces of data. This allows selection of a desired piece of data from among the most recent pieces of data and its restoration.

After completion of selection, all selected pieces of data are transmitted to the PDA and stored on the storage device 9 to complete restoration (Step S23) .

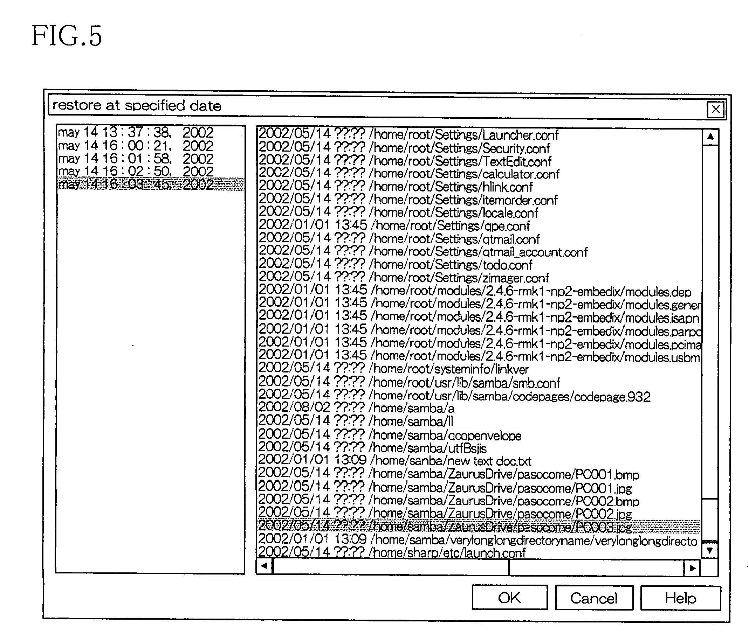

Incidentally, data to be restored is automatically received from the PDA and stored each time the specified time elapses. For this reason, there is a possibility that restoration may not always result in restoration of desired data. To resolve this problem, a screen as shown in Fig. 5 is, for example, displayed on the display device 3 in which the update date is displayed for each piece of backup data, at the time of backup data selection during restoration of automatically backed-up data. This allows easy search for data to be restored based on the update date. Further, selection of list items under this condition provides more detailed information on backup data contents, if that file is displayed using other program such as Windows standard or dedicated viewer, further facilitating search for backup data to be restored.

Note that automatic backup associated with the present invention can be interrupted by the user's intention.

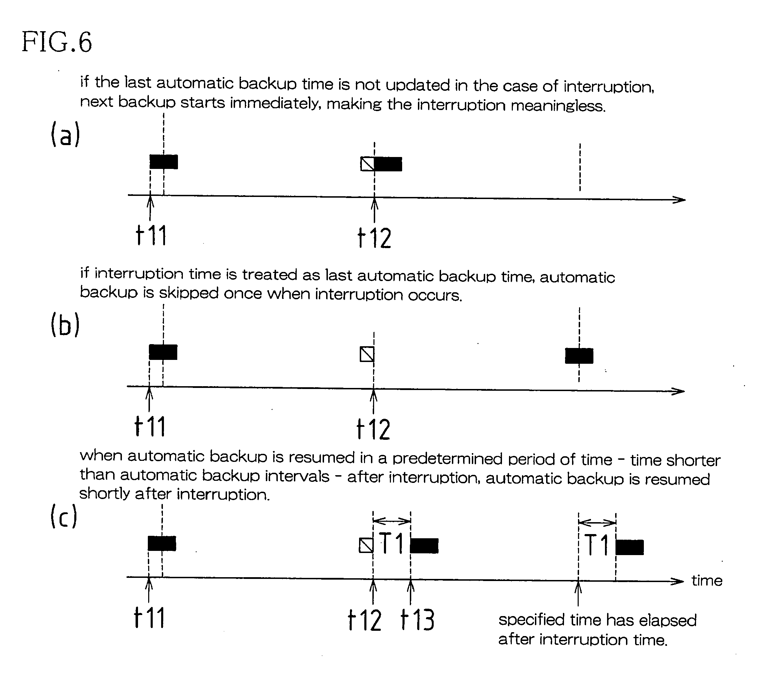

Fig. 6 illustrates a drawing showing the timing relationship when automatic backup is interrupted.

In the case of interruption of automatic backup at time t12, if interrupted automatic backup is treated as invalid as shown in Fig. 6 (a), automatic backup will resume immediately after interruption since the last automatic backup time or time t11 is still valid, thus making the interruption meaningless. Even if the resumed automatic backup is interrupted again, it will resume again, thus resulting in a repetition.

Moreover, even when automatic backup is interrupted at time t12 as shown in Fig. 6 (b), automatic backup time is updated from t11 to t12 if start of automatic backup itself is regarded as automatic backup in itself. This results in the interruption being regarded as execution of automatic backup once at time t12, thus causing automatic backup to be skipped once in reality. Therefore, another interruption of automatic backup will result in automatic backup being skipped at an increasingly rapid pace.

To avoid this problem, it is only necessary to ensure that the user can specify resumption of automatic backup at time t13 - the time which is specified time (time intervals shorter than automatic backup time) T1 after interrupted automatic backup time t12 - if automatic backup is interrupted at time t12 as shown in Fig. 6 (c) . This specified time is specified in advance by the user from a screen as shown in Fig. 4. On this screen, the user specifies a time in a box titled "Time from Cancellation to Backup Resumption." In this example, two hours are specified. Note that 24 hours are specified as automatic backup time intervals. This allows automatic backup to be resumed at the earliest possible stage in the event of its interruption and eliminates the problem of continuous interruption of automatic backup.

Note that automatic backup associated with the present invention can be interrupted by the user's intention; however, automatic backup is interrupted similarly if interruption occurs irrespectively of the user's intention as when the PDA is detached from the cradle for some reason.

Additionally, there is a case in which the data to be restored is not the target data or the data to he restored itself is damaged during restoration of backup data. To resolve this problem, it is only necessary to back up the PDA data to the PC at that point in time prior to restoration.

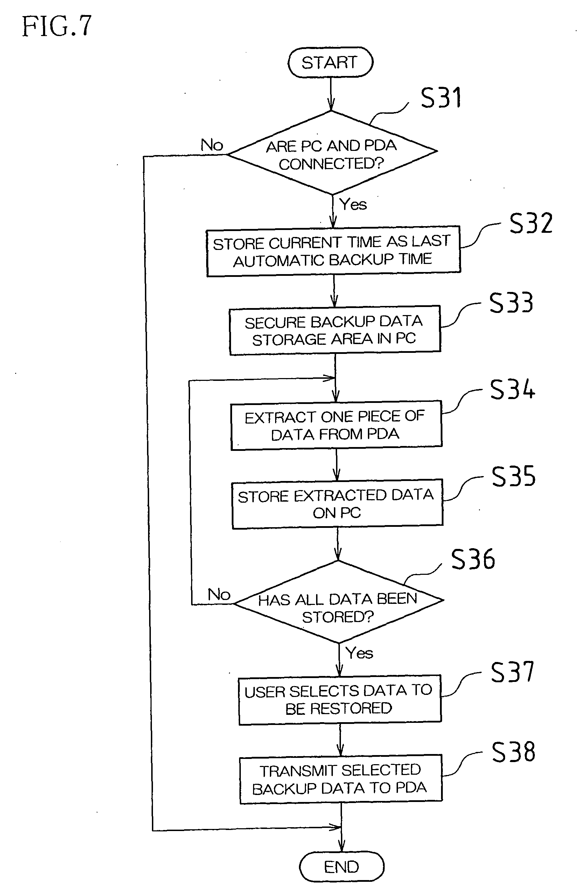

Fig. 7 shows the processing procedure for this case.

First, a confirmation is made as to whether the PDA is connected (Step S31) . As a result, if the PDA is not connected (if No is answered in Step S31), restoration is terminated without performing any further processings.

On the other hand, when the PDA is connected (when Yes is answered in Step S31), the time when data is to be restored is stored as the last automatic backup time (Step S32), and an area is secured on the storage device 4 of the PC for storing backup data (Step S33). Then, data is extracted from the storage device 9 of the PDA one piece at a time and stored on the storage device 4 of the PC, which is performed for all the data stored on the PDA (Steps S34, S35 and S36). Then, when storage of all the data is complete (when Yes is answered in Step S36), the user selects the data to be restored (Step S37), as a result of which the PC extracts the selected backup data from the data storage area according to the selection and transmits it to the PDA for storage on the storage device 9 (Step S38). This ensures restoration of the target data.

Moreover, there is a case in which one wishes to store the PDA data in a storage area of the PC before making changes even if automatic backup is running as when substantial changes must be made to the PDA data.

In this case, data can also be stored at the user-specified arbitrary time using the same method as automatic backup. That is, it is only necessary to obtain a user instruction via the input device 2 or 7 as when automatic backup starts. This allows the same processings as automatic backup to be performed at the user-specified arbitrary timing and irrespectively of the last automatic backup.

Additionally, although there is a case in which this storage of data is simply an advancement of automatic backup, there is also a case in which one wishes to retain data at that point in time on a semipermanent basis.

In this case, stored data is not automatically deleted even when there is already the maximum storable amount of data in the data storage area within the storage device 4 of the PC. To distinguish between two cases, the user is asked in advance whether to automatically delete stored data within the data storage area when automatic backup is started at a user timing. This inquiry is made available, for example, by providing an inquiry screen for asking whether to automatically delete data at the bottom of the screen shown in Fig. 4 and allowing the user to select whether to automatically delete data. Here, when "No" is selected, that stored data is not subject to automatic deletion. This allows data not subject to automatic deletion to remain stored on a semipermanent basis unless deleted by the user's intention.

On the other hand, when the user wishes to delete this data, it is necessary to do so in the storage device 4 by a method other than automatic deletion through automatic backup. Data deletion using the means called file deletion provided by Windows is, for example, possible if Windows is used as the system software of the PC.

Incidentally, it is necessary to confirm whether connection is established when whether to start automatic backup is decided. Similarly, confirmation is also needed when backup or restoration is performed at a user-specified timing. Note, however, that in this case confirmation need not always be made after the user specifies start of PC or restoration. When no connection is established, it is only necessary to ensure that the user cannot specify start of backup or restoration and that the user can instantly find out that it is impossible to do so, thus making obvious the current status of connection between the PC and the PDA and preventing needless operations by the user.

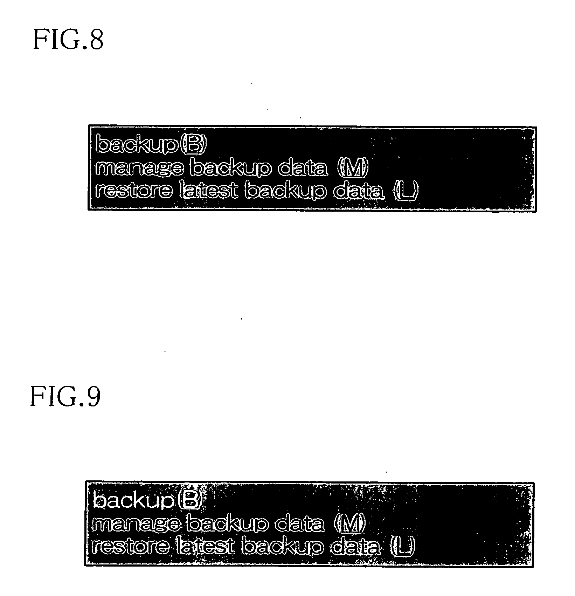

More specifically, for example, when the user starts backup, a backup item is selectable from the menu and character strings in the menu are displayed in a usual manner. If the PC and the PDA are not connected, this backup item is made unselectable from the menu and character strings in the menu are displayed in an unusual manner, for example, in lighter color, as shown in Fig. 9. In Fig. 9, the color of the characters "Backup" is lighter. Thus, it is possible to inform the user of the status of connection between the PC and the PDA by limiting functionality such that start of backup cannot be specified and making a difference between different pieces of displayed data related to user operations.

Moreover, no processings can be performed if the user wishes to store backup data on the PC and perform backup and restoration by connecting the PDA to the PC, unless the PDA and the PC are connected. Thus, since it is impossible to perform any processing when no connection is established, a possible solution here is to show that no processings are possible and indicate to the user whether connection is established.

Here, a case in which the user wishes to perform restoration is considered.

There is a strong likelihood that the case in which the user wishes to perform restoration is the case in which the PDA data is damaged in one way or another. If data is damaged only to such an extent that the system on the PDA runs and the PC and the PDA can properly exchange data with each other, simple restoration allows the PDA data to be restored to normal. However, if connection cannot be established as a result of damage to critical PDA data, it is impossible to perform restoration from the PC.

As a solution to this problem, a method in which start of processings can be selected is provided even when no connection is established, in place of the previously described solution in which whether processings are possible is displayed according to the status of connection.

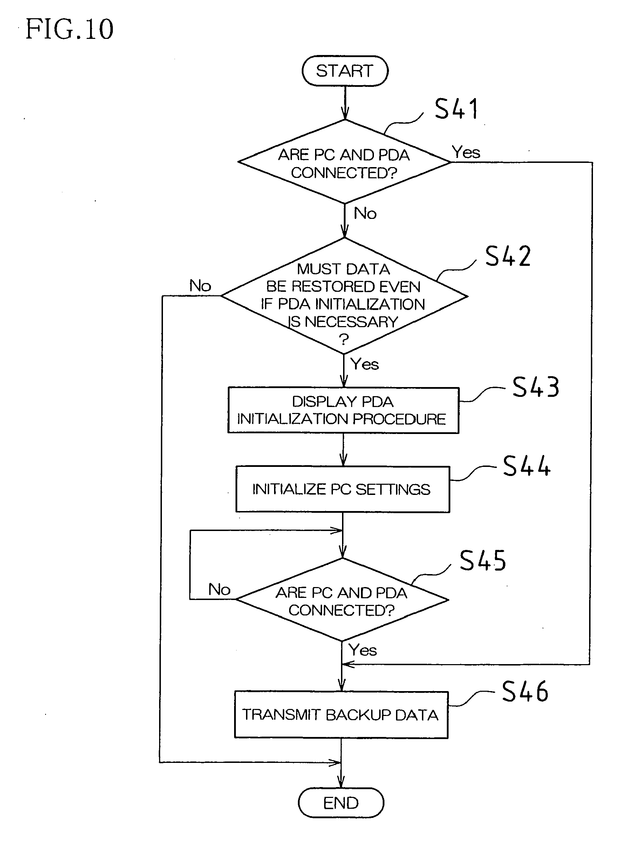

Fig. 10 illustrates this processing flow.

That is, if we assume that the user instructs that restoration be started, the program running on the PC first examines the status of connection between the PC and the PDA (Step S41). As a result, when the PDA is connected (when Yes is answered in Step S41), backup data is transmitted immediately from the PC to the PDA (Step S46). On the other hand, if the PDA is not connected (if No is answered in Step S41), a confirmation is made as to whether to perform restoration even by completely initializing the PDA (Step S42) . The reason for this is that since it is impossible to automatically distinguish between simple non-connection and PDA anomaly, a selection by the user's instruction is needed.

Here, restoration is interrupted in the case of simple non-connection. On the other hand, if the user chooses to initialize the PDA before restoration (when Yes is answered in Step S42), the PDA initialization procedure is displayed on screen (Step S43) . At the same time, connection-related settings of the PC' s program are reset to their statuses immediately after PDA initialization (Step S44). Under this condition, a monitoring mode is entered in which connection between the PC and the PDA is monitored (Step S45). When the PDA is properly initialized and when the PC and the PDA are connected (when Yes is answered in Step S45), the PC transmits backup data to the PDA (Step S46). This allows restoration to be performed even when the PC and the PDA are unable to communicate with each other.

Moreover, when the user wishes to restore backup data from the PC to the PDA, the system on the PDA must run at least to such an extent that it can communicate with the PC. That is, the data required for the system to run is replaced while the system is running. In this case, since replacement of files used by the system running on the PDA during restoration prevents the system from running properly, it is preferable to activate only the minimum functionality to the extent possible during restoration.

For this reason, needless applications on the PDA are exited during restoration to ensure that only the restoration progress is displayed, and key inputs are rejected to minimize data required by the system running on the PDA. This allows the number of files to be replaced to increase.

Further, it is sufficiently likely that cases arise such as those in which the user wishes to temporarily withhold automatic backup or perform only manual backup in place of automatic backup. To revolve this problem, it is only necessary to ensure that the user can select whether to perform automatic backup.

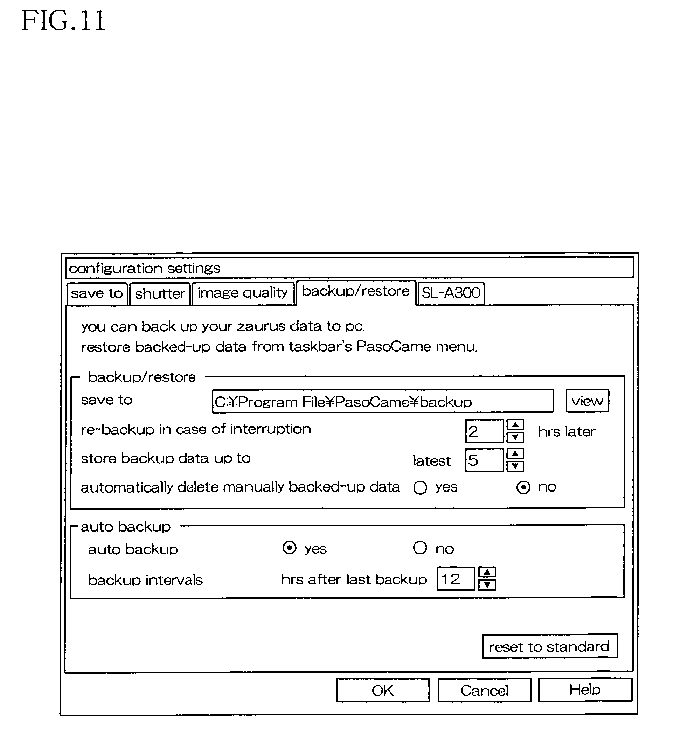

More specifically, a screen as shown in Fig. 11 is made available such that the user can select whether to perform automatic backup. This allows the user to specify whether to perform automatic backup.

The information processing apparatus is realized by the program designed to ensure proper functioning of the processings for automatically backing up data of other information equipment and restoring backed-up data.

The subject matter of the present invention may be this program itself or a computer-readable record medium which has stored this program.

With the present invention, this record medium may be a program medium itself including memory needed for the processing apparatus (microcomputer) 1 shown in Fig. 1 to perform processings such as ROM or a program medium which becomes readable by insertion of a record medium into a program reading device provided as an external storage device not shown. With the present invention, the storage device 4 serves as a program medium. In either case, the stored program may be accessed by the microcomputer for execution or read and loaded into a program storage area not shown of the microcomputer for execution. This program to be loaded must be stored in advance on the device's main body.

Here, the program medium is a record medium separable from the main body and may be a tape-based medium such as magnetic or cassette tape, magnetic disk such as FD (flexible disk) or HD (harddisk), optical disk-based medium such as CD-ROM, MO, MD or DVD, card-based medium such as IC card (including memory card), optical card or a medium which holds programs in a stationary manner such as masked ROM, EPROM, EEPROM or flash ROM.

Moreover, with the present invention, since the system configuration of the present invention is connectable to communications networks including the Internet, the program medium may be a medium which holds programs in a mobile manner as that in which programs are downloaded from a communications network. Note that when a program is downloaded from a communications network, that program to be downloaded may be stored in advance on the device's main body or installed from a separate record medium. Note that the contents of storage on the record medium are not limited to programs and may be data.

Further, with the present invention, the program may be the processings themselves performed by the processing device 1 shown in Fig. 1, a program which can be or has been loaded by accessing communications network including the Internet or a program which is to be transmitted. Further, the program may be the result of the processings performed by the information processing apparatus based on the loaded program, that is, final outcome. Or, the program may be the result of the processings performed by the information processing apparatus at the time of transmission, that is, final outcome. Note that these are not limited to programs and may be data.

As described above, according to embodiment 1, it is possible to perform automatic backup of data from other information equipment to an information processing apparatus such as PC which is not always connected, by monitoring the status of connection with other information equipment such as PDA and time intervals from the last backup time and performing automatic backup when other information equipment is connected at the backup start time.

<Embodiment 2>
With this embodiment 2, although the PC and the PDA having the configurations, which are assigned the same signs as with the embodiment 1, are used for the sake of convenience, each of the configurations is not designed to perform the same operations as with embodiment 1.

An embodiment of the present invention is described below by referring to the drawings.

Fig. 1 shows an embodiment of information equipment to realize the data transmission and reception method associated with the present invention and illustrates a functional block diagram schematically showing a system configuration for transmitting data from a PC which is an information processing apparatus to a PDA which is other information equipment associated with the present invention.

The PC is comprised of the processing device 1 which performs processings such as converting data to be handled into a human-understandable form and updating data, the input device 2 such as keyboard or mouse which accepts user operations, the display device 3 which presents information such as images and sounds to the user, the storage device 4 which stores data temporarily converted into information such as data to be handled, images and sounds and the connection device 5 which establishes connection with equipment such as other PCs and PDAs via a connection medium such as USB cable and the Internet.

Moreover, the PDA is comprised of the processing apparatus 6 which performs requested processings according to user operations, the input device 7 which accepts user operations, the display device 8 which presents information such as images and sounds to the user, the storage device 9 which stores information received from other PCs and PDAs and internally temporarily converted data and the connection device 10 which establishes connection with other PCs and PDAs.

With this embodiment, image data is, for example, considered as basic data to be extracted. There are two ways to extract image data; (1) directly extracting image data from the CRT (Cathode Ray Tube) and other display devices and (2) allowing individual programs to extract image data by making inquiries to the system software about image information. Moreover, it is only necessary to transmit information, which has been converted into basic data, to information equipment which can directly manipulate application data also when manipulation of application data requires more time than manipulation of basic data. This allows only necessary data to be transmitted, thus ensuring faster manipulation of application data.

Additionally, when the user wishes to extract only text information as basic data, the clipboard is used. Copying of text data to the clipboard is often realized by pressing the Ctrl and C keys simultaneously as long as a Windows (registered trademark of Microsoft; hereafter the same) program is used. This is based on the philosophy that different operations needed in different programs result in difficulty of use. Using this arrangement allows extraction of text data from application data managed independently by individual programs via the clipboard, thus allowing transmission of basic data to information equipment such as PDA which runs on a different system.

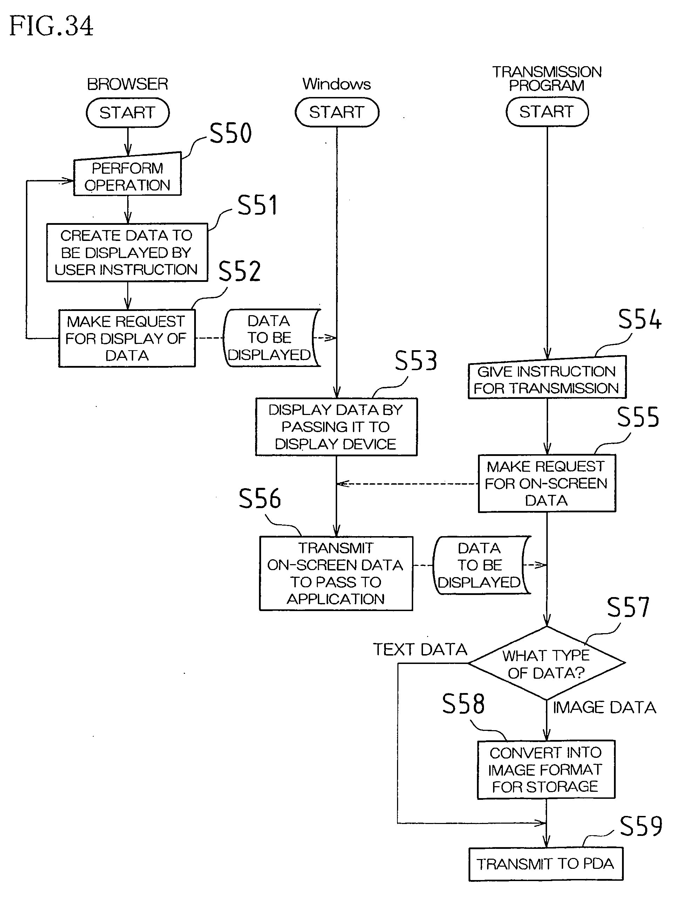

With this embodiment, a processing example is described as a specific example, by referring to the flowchart shown in Fig. 34, in which data, which will be viewed on the PDA is created on a Windows-equipped PC from Hypertext containing information such as drawings, text and links indicating references to other documents.

When data is viewed on the PC alone, the processing device 1 interprets and executes the Hypertext viewing program (hereafter browser) read from the storage device 4 or obtained from other equipment via the connection device 5.

That is, user instructions such as where it should be displayed within the whole and which link to follow are obtained from the input device 2.

For example, when the PC runs using a window system, there is a case in which all information is not displayed within the window area. In this case, the area to be displayed, that is, the area from which data is to be extracted is specified by manipulating the input device 2 such as the scroll bar or mouse.

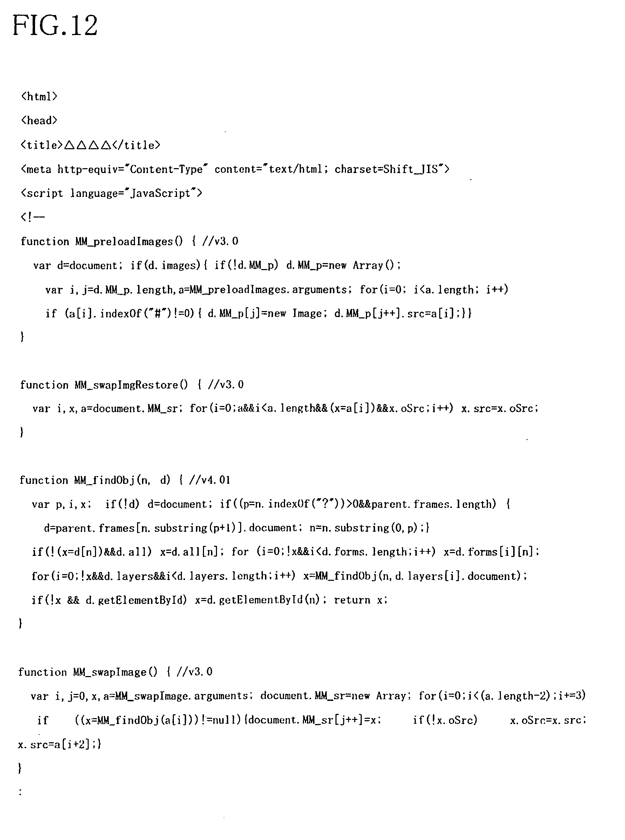

Based on such user instructions, Hypertext stored on the storage device 4 or Hypertext obtained from other equipment through the connection device 5 via a connection network such as the Internet (refer to Fig. 12) is processed into a human-viewable form (Step S51) .

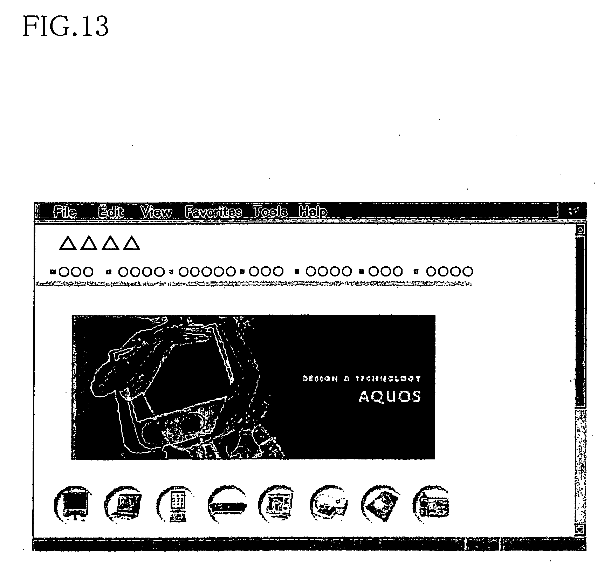

This processed data is passed to Windows once (Step S52) and displayed on the display device 3 in the form as shown in Fig. 13 (Step S53).

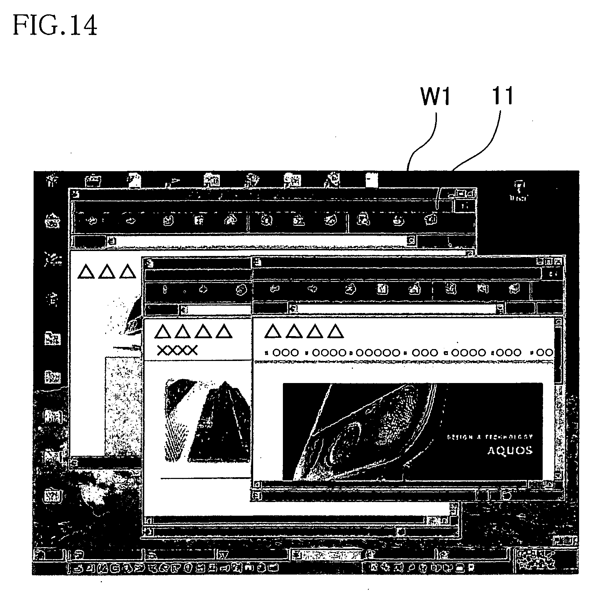

Moreover, Windows is capable of displaying a plurality of windows on screen as shown in Fig. 14. In this case, it is necessary to first select a window containing data to be extracted. This selection can be made, for example, by clicking on a title bar 11 of a background window W1 and bringing the window W1 to foreground to make it an active window.

Here, the area from which data is to be extracted is not limited to a single screen which is actually displayed on the display device 3 and may include those areas not displayed on this screen. That is, this is a case in which only part of the data is extracted and displayed due to restrictions such as the size of the display device 3 despite the fact that the data is originally one page and therefore one screen is comprised of the entire data. In this case, not only displayed on-screen data but also data which would otherwise be displayed can be extracted as on-screen data.

In the case of Windows, for example, it is possible to display followups to the currently displayed screen by pressing the button on the scroll bar with the input device 2 such as mouse or pressing a key for displaying followups to the currently displayed screen such as the PageUp or PageDown key. Consequently, it is possible to extract the on-screen image without restrictions of the display device 3 by first creating the same operation with the processing device 1 as this operation, next displaying followups to the currently displayed image and then loading the image.

Here, we assume that the operation "Transmit to PDA" is obtained from the user via the input device 1.

This operation may be, for example, an operation such as pressing of a keyboard key, pressing of a button indicating start of transmission with a pointing device such as the mouse or any other operation.

In response to this operation, the transmission program requests Windows to obtain one page of on-screen data (substantially one page of the on-screen data) which is currently displayed (Step S55) .

Windows passes the requested area of on-screen data to the transmission program (Step S56).

The transmission program determines the type of obtained data (Step S57) and when the obtained data is image data, the operation proceeds from Step S57 to Step S58, where the program converts it into an image format (e.g., JPEG, DIB) suitable for storage on the PDA and transmits it to the PDA (Step S59) . On the other hand, if the obtained data is text data containing only character information, the operation proceeds from Step S57 to Step S59 where the program transmits data as is without converting the image format. Here, it is possible for the PC to produce a tone indicating completion of transmission.

The PDA performs processings according to processings predetermined on the PDA such as storing the received data on the storage device 9 or displaying it on the display device 8 without storing it.

Execution of such a series of processings makes it possible to convert application data manipulated by the sender's program into basic data and transmit it to the PDA without performing any special processing on the sender' s program and also display Hypertext even on a PDA not supporting Hypertext as long as the PDA can display images.

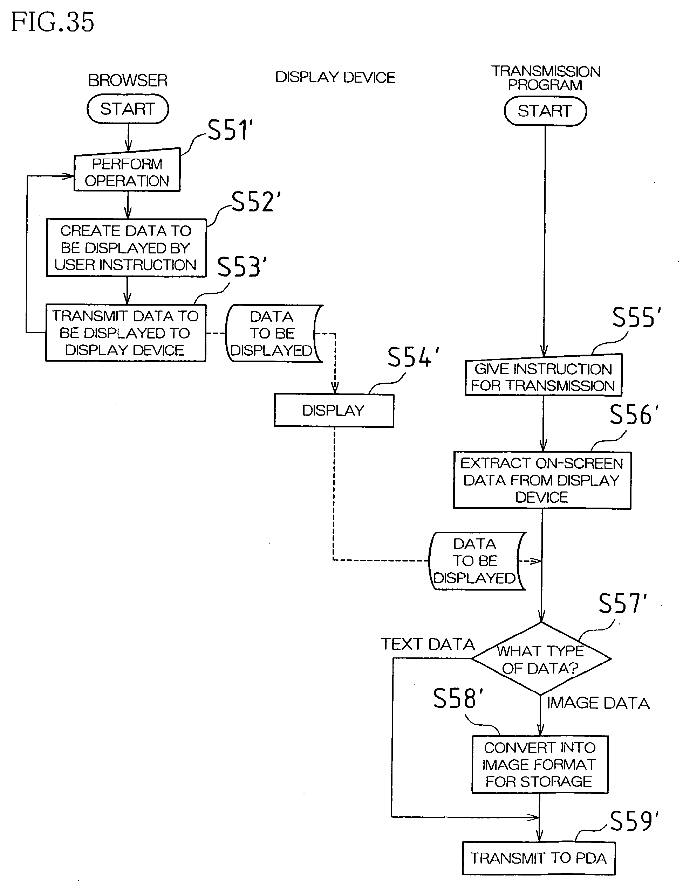

Note that although Windows is requested to obtain on-screen data in Step S55 in the specific example, the similar effect can be obtained by extracting data from the display device 3 and transmitting the data to the PDA.
In this case, the processing procedure shown in Fig. 35 is used. That is, this example represents a case in which the display device 3 and individual programs directly exchange on-screen data without using Windows.

That is, user instructions are obtained from input device 1 in Step S51' by the same means as in the earlier Step S50. In the next Step S52', data to be displayed is created by the same means as in the earlier Step S51.

Next, although Windows is requested to transmit data in the earlier Step S52, the display device 3 is instructed to directly display data in this Step S53' . The display device 3 displays data according to this instruction (Step S54').

If the transmission program receives an instruction under this condition to transmit data to the PDA by the same means as in the earlier Step S54 (Step S55'), the transmission program obtains on-screen data from the display device 3 according to this instruction (Step S56') and determines the type of obtained on-screen data (Step S57'). As a result, if the obtained on-screen data is image data, the operation proceeds to Step S58' where the program converts the data into a PDA-manipulatable image format (e.g., JPEG, DIB) and transmits it to the PDA (Step S59'). On the other hand, if the obtained data is text data containing only character information, the operation proceeds from Step S57' to Step S59' where the program transmits data as is without converting the image format.

Here, data to be transmitted can be classified into the following three types including the one screen of data.

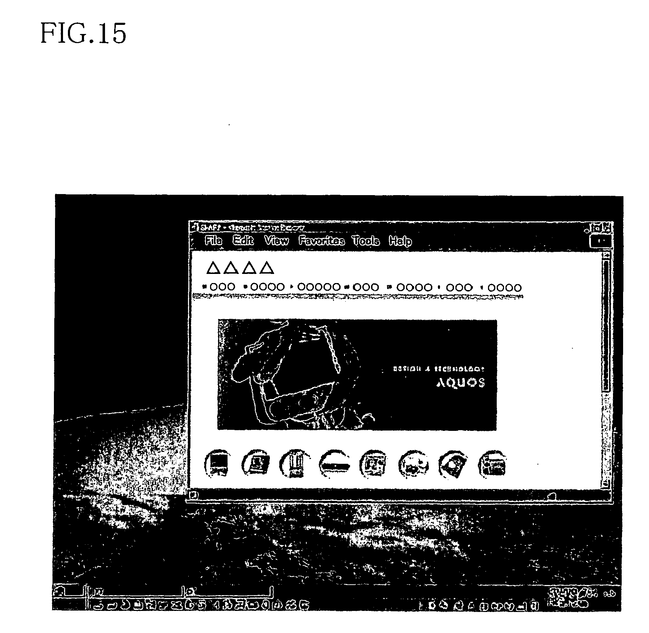

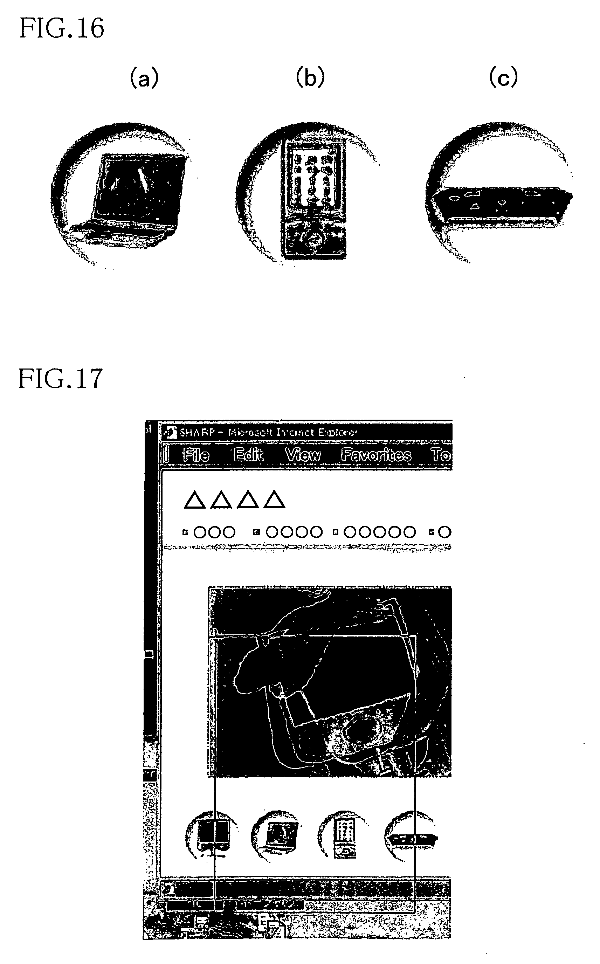

The first type is (a) the entire screen as shown in Fig. 15, the second type (b) only the window displayed by the program displaying Hypertext as shown in Fig. 13 and the third type (c) a specific area of the screen as shown in Fig. 16.

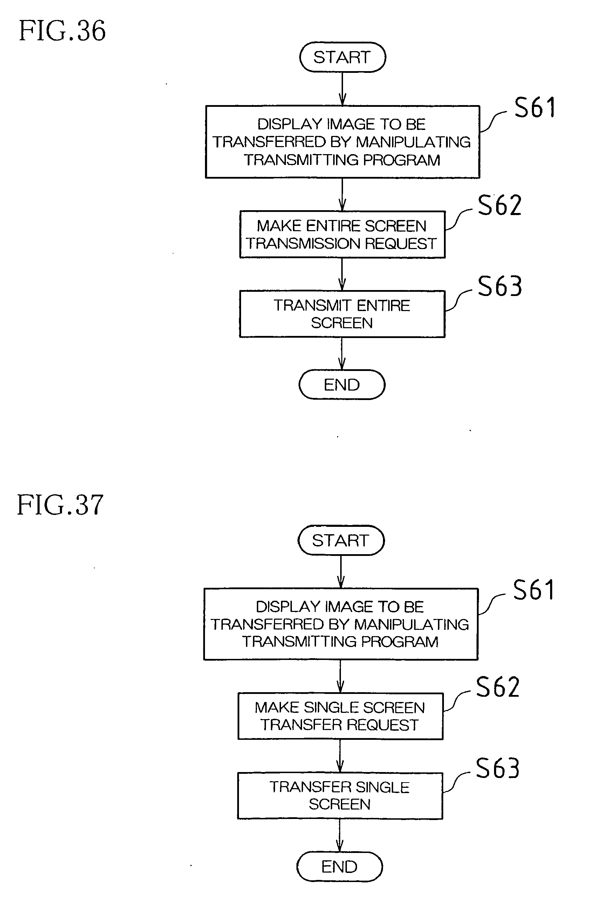

When area (a) or (b) is transmitted, the data to be transmitted is determined at the moment when the user makes a request to start transmission. Figs. 36 and 37 show the user operation procedures respectively when areas (a) and (b) are transmitted.

That is, the user displays the data to be transferred to and displayed on the PDA on the PC's display screen first (Step S61) and then performs "Transmission Start" operations such as pressing a specific key or clicking on a specific button with the mouse. This series of operations initiates data transfer to the PDA (Steps S62 and S63). That is, the entire screen of data is transferred by entire screen transfer request in the case of (a) while single screen of data is transferred by single screen transfer request in the case of (b).

In contrast, when area (c) is transmitted, operations for specifying information such as which part of the screen is to be transmitted are required in addition to "Transmission Start" operations.
Operations in this case can be classified into two types; (c-1) specifying an area after "Transmission Start" operations and (c-2) specifying an area in advance and transmitting the specified area of data as soon as "Transmission Start" operations are performed.

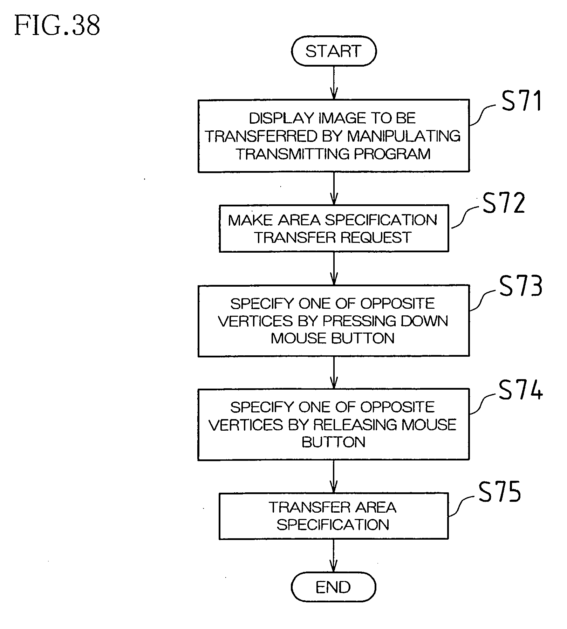

First, the user operation procedure for specifying a rectangular area with the mouse under condition (c-1) is described by referring to the flowchart shown in Fig. 38.

First, the user displays the data to be transferred to and displayed on the PDA on the PC's display screen first (Step S71). Then, the user makes a transmission request for area specification (Step S72) . In response to the request, the transfer program enters a wait state in which it waits for area specification. With the program under this condition, the user specifies a rectangular area by combining pressing and releasing of the mouse button (Steps S73 and S74) . And, the program starts transfer to the PDA immediately when rectangular area specification is complete (Step S75).

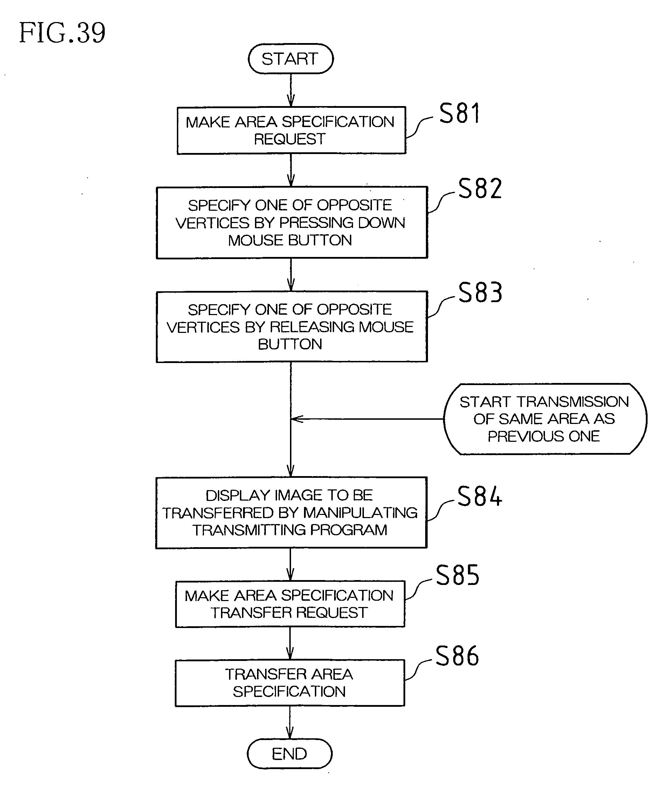

Next, the user operation procedure for specifying a rectangular area with the mouse under condition (c-2) is described by referring to the flowchart shown in Fig. 39.

First, the user makes a request for area specification (Step S81). At this point in time, no transmission has been initiated. Next, the user specifies a rectangular area by combining pressing and releasing of the mouse button as in Steps S73 and S74 (Steps S82 and S83). At this point in time, no transmission has been initiated, either. Next, the user displays the data to be transferred by operating the transfer program (Step S84). Then, when the user makes a transmission request for area specification, the area of data specified in Steps S82 and S83 is transferred to the PDA (Step S86).

Note that if the user specifies the same area as before when transferring data in succession, data can be transferred again simply by updating the transfer program's on-screen data and making a transmission request for area specification without specifying an area again.

Moreover, when an area is specified under condition (c-1) or (c-2), a rectangular size for area specification is limited, and the user is required to enter a position while the limited area is displayed (as indicated by the bounding rectangle traced by a solid line) as shown in Fig. 17 in consideration of PDA restrictions (restrictions such as the size displayable on the display device 8 and the limit size storable on the storage device 9), thus allowing area specification while making the user aware of how data is displayed on the PDA.

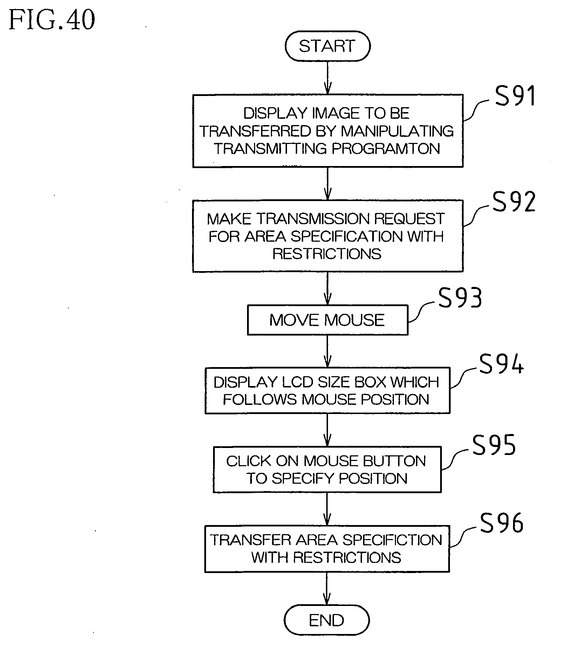

Here, the user operation procedure for displaying restrictions associated with display capability of the display device 8 of the PDA on the display device 3 of the PC is described by referring to the flowchart shown in Fig. 40 when the display device 8 of the PDA is comprised of an LCD (Liquid Crystal Display) having a display capability of 240 pixels across and 320 pixels down.

First, the user displays the data to be transferred on the display device 3 of the PC by operating the transfer program (Step S91). Next, the user makes a transmission request for area specification with restrictions (Step S92) . In response to the request, the transfer program displays LCD restrictions of the PDA display device 8 on the display device 3 of the PC (Step S94) according to the mouse movement as a result of succeeding user operations (Step S93). With the display under this condition, the user specifies an area by clicking on the upper left corner of the area (Step S95) . Since this results in the restriction or the area of 240 pixels across and 320 pixels down being displayed, the specified area data with restrictions is transferred to the PDA when the user makes a transmission request for area specification (Step S96).

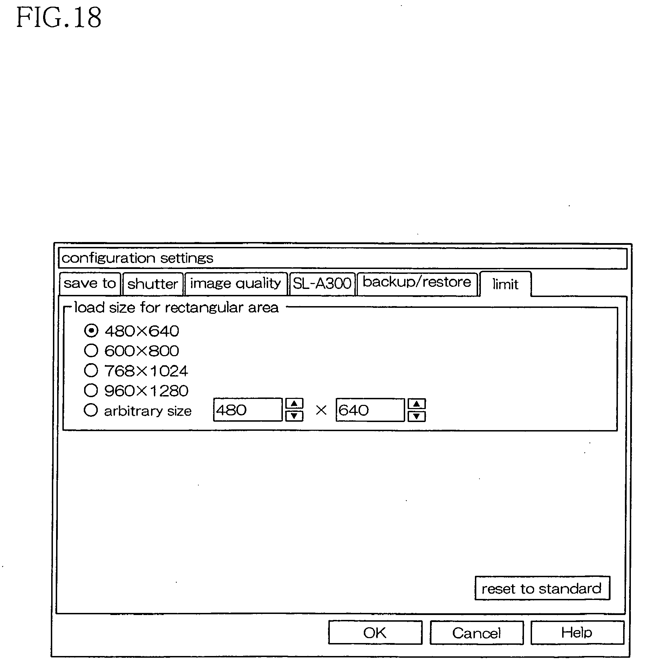

Note that although the predetermined area (area appropriate for the PDA display capability) is displayed in the area specification display, this area may be arbitrarily specified or changed by the user. Fig. 18 illustrates a rectangular area setting screen. In this example, four specifiable rectangular areas (480x640, 600x800, 768x1024, 960x1280 pixels) are made available in advance, and in addition to these, a setting field for the user to specify an arbitrary area is also provided. This allows the user to select a desired area of data to be transferred to the PDA.

The description given up to this point is premised on constant connection between the PC and the PDA, which, however, is not always the case. Therefore, three cases are described below; the first case in which the PC and the PDA are not connected, the second case in which no connection is established accidentally due to improper contact or some other reason despite the user' s intention and the third case in which the connection status is in a transitory stage where processings are performed for establishment of connection. In any of these cases, since no transmission can be performed, one of the following four processings is selected and performed.

The first processing is that in which no processings are performed even if a transmission request is made as long as transmission is not possible.
Meanwhile, the second processing is that in which data to be transmitted is stored temporarily on the PC at the time of transmission request if transmission is not possible and data is transmitted immediately to the PDA when transmission becomes possible as a result of establishment of connection with the PDA. On the other hand, the third processing is that in which data to be transmitted is stored temporarily on the PC at the time of transmission request if transmission is not possible and a confirmation is made as to whether to transmit data before transmission to the PDA. Meanwhile, the fourth processing is that in which a confirmation is made as to whether to transmit current data when transmission becomes possible if transmission is not possible and, only when data is to be transmitted, data to be transmitted is stored temporarily on the PC and data is transmitted immediately to the PDA when transmission becomes possible as a result of establishment of connection with the PDA. These first to fourth processings are focused on individual transmission data and do not prevent acquisition of other data while certain data is manipulated according to any of these processings.

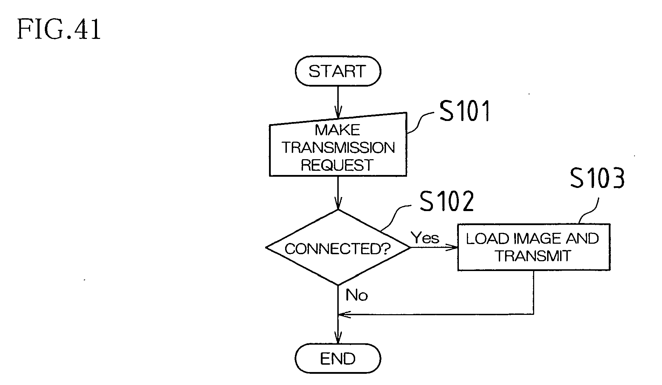

Next, the first processing is described by referring to the processing procedure shown in Fig. 41.

That is, a confirmation is made as to whether connection is established with the PDA (Step S102) when a transmission request is made (Step S101) . As a result, if no connection is established, the processing is terminated without creating transmission data. On the other hand, when connection is established, data is loaded according to the individual methods discussed earlier, converted into an image format suitable for storage on the PDA and transmitted to the PDA (Step S103) . Note, however, that if the data is text data containing only character information, it is transmitted to the PDA without converting the image format.

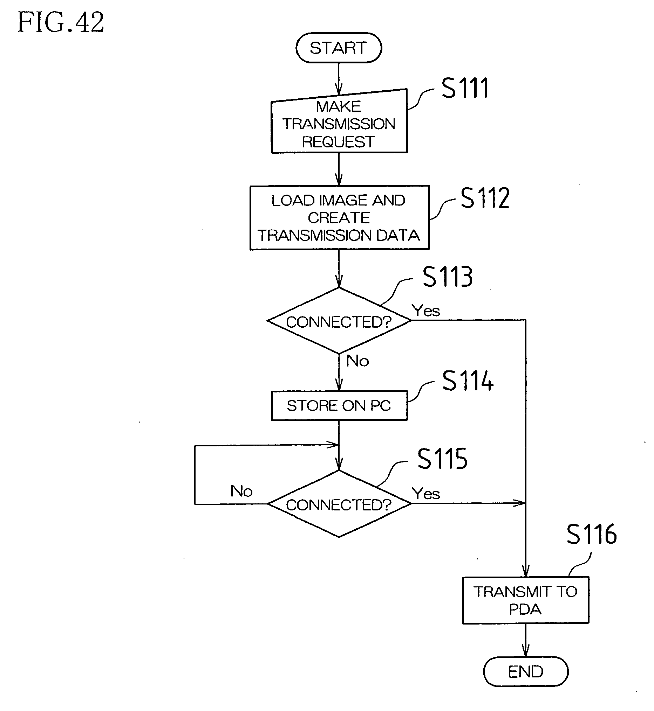

Next, the second processing is described by referring to the processing procedure shown in Fig. 42.

With the second processing, transmission data is created by loading the image according to the individual methods discussed earlier and converting it into an image format suitable for storage on the PDA (Step S112) when a transmission request is made (Step S111). Note, however, that if the data is text data containing only character information, transmission data is created as is without converting the image format. Then, a confirmation is made as to whether connection is established (Step S113) and created data is transmitted to the PDA (Step S116) when connection is established (when Yes is answered in Step S113).

On the other hand, if no connection is established (if No is answered in Step S113), created data is stored once on the storage device 4 of the PC (Step S114). Then, the status of connection with the PDA is monitored (Step S115), and when connection between the PC and the PDA is confirmed (when Yes is answered in Step S115), stored data is transmitted to the PDA (Step S116).

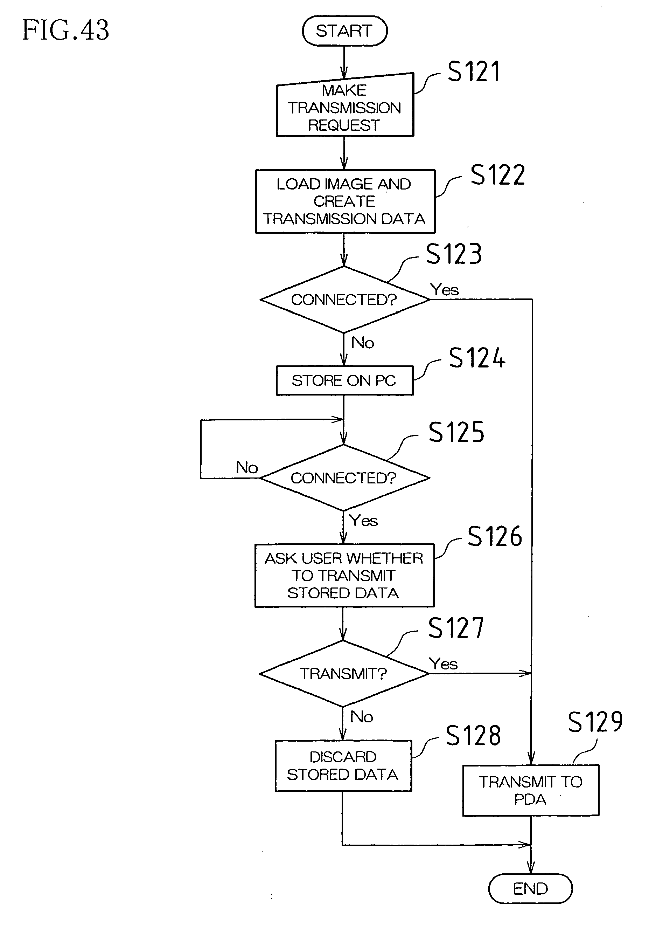

Next, the third processing is described by referring to the processing procedure shown in Fig. 43.

With the third processing, transmission data is created by loading the image according to the individual methods discussed earlier and converting it into an image format suitable for storage on the PDA (Step S122) in response to a transmission request (Step S121), regardless of whether connection is established. Note, however, that if the data is text data containing only character information, transmission data is created as is without converting the image format. Then, a confirmation is made as to whether connection is established (Step S123) and created data is transmitted to the PDA (Step S129) when connection is established (when Yes is answered in Step S123).

On the other hand, if no connection is established (if No is answered in Step S123), converted data is stored once on the storage device 4 of the PC (Step S124). Then, the status of connection with the PDA is monitored (Step S125), and when connection between the PC and the PDA is confirmed (when Yes is answered in Step S125), the user is asked whether to transmit stored data to the PDA (Step S126). This question is displayed on the display device 3.

When the user performs an operation such as clicking on a specific button with the mouse or making a specific key input from the input device 2 in response to the question, the processing device 1 interprets the question according to the operation performed. As a result of interpretation, when data is to be transmitted (when Yes is answered in Step S127), the stored data is transmitted to the PDA (Step 129). On the other hand, if data is not to be transmitted (if No is answered in Step S127), stored data is discarded (Step 128) and the processing is terminated without transmitting data to the PDA.

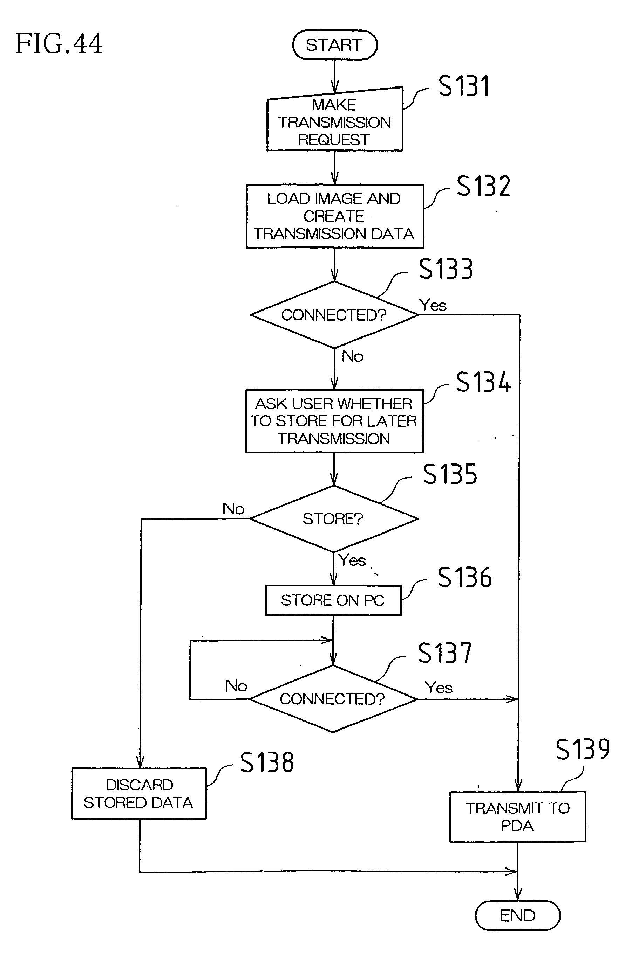

Next, the fourth processing is described by referring to the processing procedure shown in Fig. 44.

With the fourth processing, transmission data is created by loading the image according to the individual methods discussed earlier and converted into an image format suitable for storage on the PDA (Step S132) when a transmission request is made (Step S131), regardless of whether connection is established. Note, however, that if the loaded image is text data containing only character information, transmission data is created as is without converting the image format. Then, a confirmation is made as to whether connection is established (Step S133) and created data is transmitted to the PDA (Step S139) when connection is established (when Yes is answered in Step S133).

On the other hand, if no connection is established (if No is answered in Step S133), the user is asked at this point in time whether to transmit data after establishment of connection (Step S134). That is, the user is asked whether to store the obtained data once before transmission to the PDA when connection is established later between the PC and the PDA. This question is displayed on the display device 3 (Step S135) .

When the user performs an operation such as clicking on a specific button with the mouse or making a specific key input from the input device 4 in response to the question, the processing device 1 interprets the question according to the operation performed. As a result of interpretation, if the obtained data is not to be transmitted (if No is answered in Step S135), the data is discarded (Step 138).

On the other hand, when data is to be transmitted (when Yes is answered in Step S135), converted data is stored once on the storage device 4 of the PC (Step 136). Then, the status of connection with the PDA is monitored (Step S137), and when connection between the PC and the PDA is confirmed (when Yes is answered in Step S137), the stored data is transmitted to the PDA (Step S139).

Note that although the obtained data is converted into an image format suitable for storage on the PDA and stored on the storage device 4 if it is image data in the second or fourth processing, the obtained data may be stored as is on the storage device 4 and the data, read from the storage device 4, may be converted into an image format suitable for storage on the PDA before transmission to the PDA after establishment of connection between the PC and the PDA and transmitted.

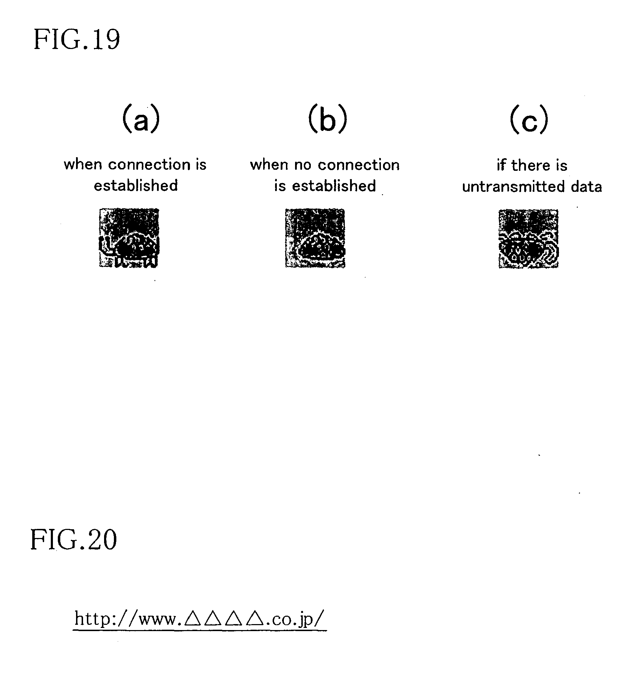

Moreover, although a judgment is made as to whether the PC and the PDA are connected in the first or fourth processing, the user can be informed of the status of connection with the PDA by displaying that state (connection or non-connection) on the display device 3 using graphics as shown in Fig. 19 (a) and (b). In this example, Fig. 19 (a) indicates connection while Fig. 19 (b) non-connection. Additionally, if there is untransmitted data stored on the storage device 4, the user can also be informed of existence of untransmitted data in the PC by displaying its existence on the storage device 4 using graphics as shown in Fig.19 (c). In the case of a Windows-equipped PC, for example, it is possible to confirm the connection status and presence/absence of untransmitted data by displaying the graphical images as shown in Figs. 19 (a) to 19 (c) in the area called the task tray.

Incidentally, additional information can be embedded into text and image data depending on the format. In the case of JPEG, for example, information can be embedded into an area called the application marker segment.

Moreover, even if information cannot be embedded, the same functionality can be realized by making available separate data and indicating that the data constitutes additional information for text or image data. For example, when text data is stored as a file, it is possible to realize the same functionality as the JPEG' s application marker segment by making available a separate text file and writing in this file both text file names to be associated and additional information.

And, writing, for example, conditions under which text or image data was created to this additional information portion ensures more flexible manipulation of data on the PDA.

For example, although Hypertext is displayed in the first or fourth processing, it is possible to not only display the data transmitted from the PC but also access that data by embedding information (e.g., URL) including where the transmitted data originates as shown in Fig. 20 as additional information if means are available on the PDA which display Hypertext.

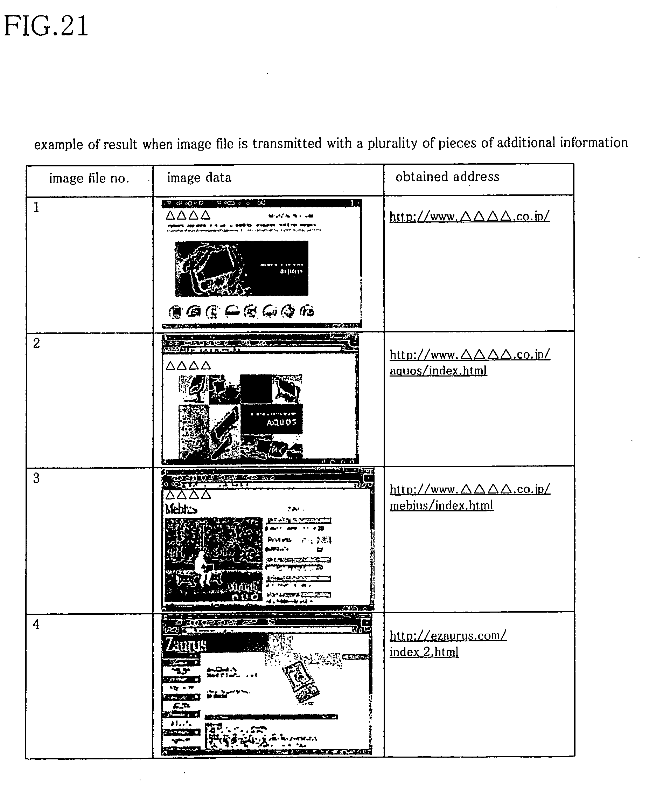

Fig. 21 shows an example of results of transmission of such additional information conducted a plurality of times.

For example, when the JPEG's application marker segment is used, each line of the table shown in Fig. 21 corresponds to one JPEG file. And, each JPEG file includes the Web page address (URL) referenced when displaying each image in the application marker segment as additional information.

In the processing, the PDA selects a processing to be performed on the data transmitted to the PDA. That is, the PDA performs a processing according to the processing predetermined on the PDA such as storing the received data on the storage device 9 or displaying it on the display device 8 without storing it. Moreover, even when data is stored on the storage device 9, the PDA also determines on which storage medium the data is to be stored if the storage device 9 is comprised of a plurality of storage media. Further, the PDA determines in which format the data is to be stored on the storage device 9.

For this reason, it becomes possible to perform all processings from data acquisition to data storage on the PDA simply through instructions from the PC by specifying these processings not from the PDA but from the PC. This specification method is described below.

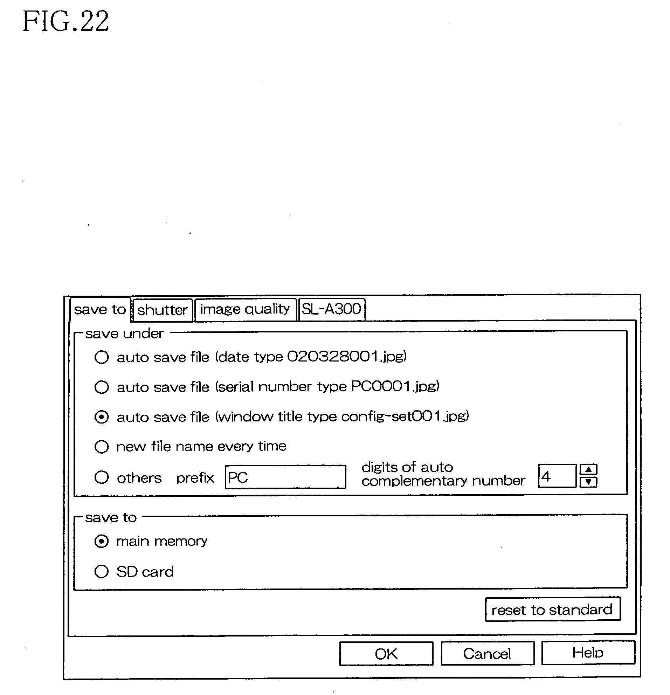

As an example of specifying a storage location, a screen as shown in Fig. 22 is displayed on the display device 3 of the PC and two options are provided to the user for "Save to" at the bottom of the screen. Data is stored as a file within the PDA' s file system called the main memory in one of the options while data is stored as a file within the SD (Secure Digital) card's file system in another option. This selection is made, for example, prior to creation of data to be transferred.

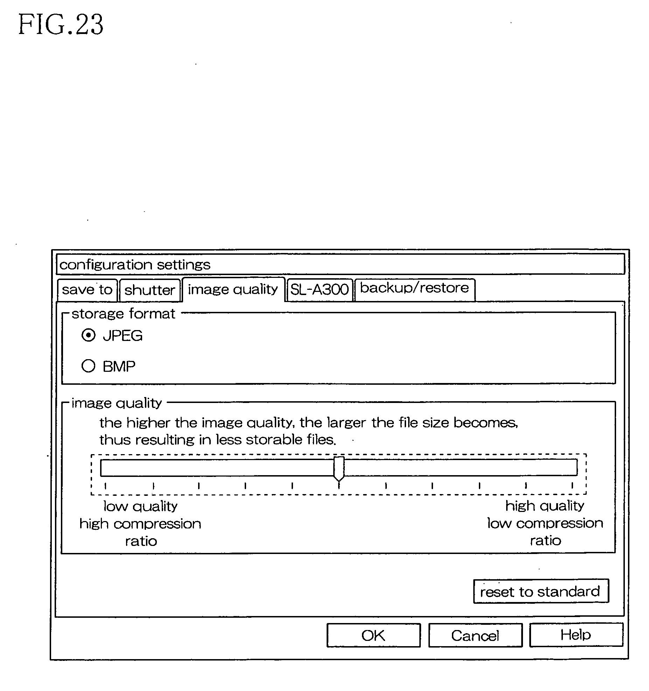

Moreover, as an example of specifying a storage format, a screen as shown in Fig. 23 is displayed on the display device 3 of the PC and two options or JPEG and BMP are provided to the user for "Storage Format" at the top of the screen.

Here, the compression ratio setting when JPEG, a compressible data storage format, is selected is described.

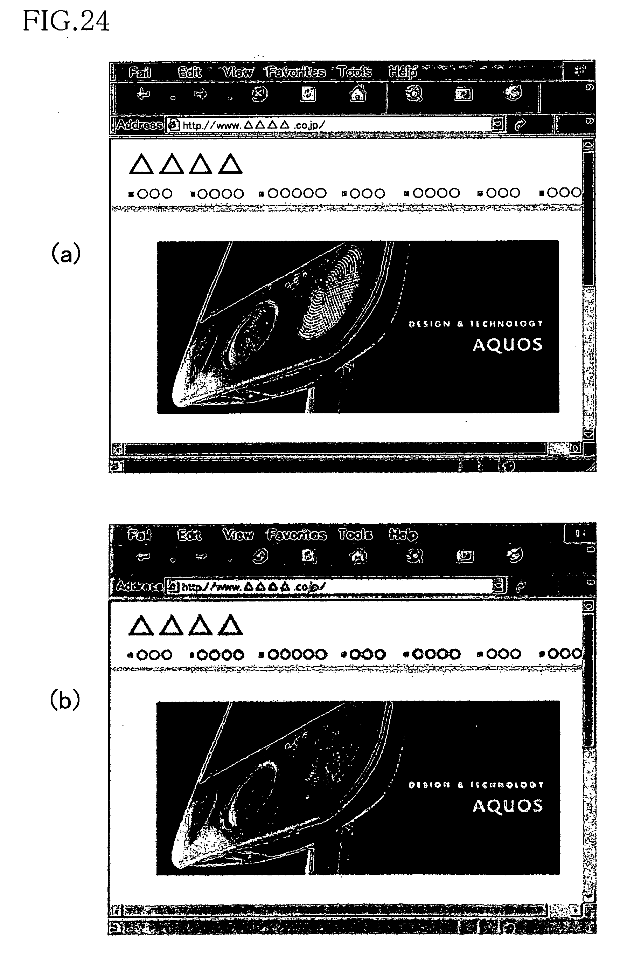

When lossy compression is used as compression method, information is lost in the course of compression. It is possible to change the size of eventually created image data by changing the degree of this loss. Prior to extraction of image data, for example, the memory positions are changed based on the operational information obtained through operations such as displaying the screen shown in Fig. 23 on the display device 3 and moving the mouse while pressing and holding the mouse button, with the cursor placed on the slider within "Image Quality" at the bottom of the screen and releasing the mouse button when a desired position is reached. This allows the size of succeeding image data to be changed. Figs. 24(a) and 24(b) show examples of obtained image data respectively when the image size is increased (when the slider is moved to the right in the figure) and reduced (when the slider is moved to the left in the figure). The image quality in Fig. 24(b) is slightly lower than that in Fig. (a).

Additionally, although the case in which one piece of data is created was described in the processings, in reality data is likely often transmitted by performing a series of the processings several times. In this case, it is difficult for the user or the system itself to determine from what type of data the data has been created.

To revolve this problem, it is only necessary to embed information which will serve as index for the transferred data. For instance, information is embedded into the file name if the processing involves storage of data in a file system.

More specifically, the data creation date is embedded into the file system's file name. Or, the PC' s window title is embedded. Or, the user-entered data is embedded. Such embedding facilitates search for the target data from among a large number of data.

For example, a plurality of options are provided to the user by displaying a screen as shown in Fig. 22 on the display device 3.

The first method of embedding information serving as index is the case in which "Auto Save File (Date Type) " under "Save Under" in Fig. 22 is checked; in this case, the transfer program automatically creates file names of image files to be stored in the file system from transferred data creation dates.

Moreover, the second method of embedding information serving as index is the case in which "Auto Save File (Serial Number Type) " under "Save Under" in Fig. 22 is checked; in this case, the transfer program automatically creates file names of text or image files to be stored in the file system in the order in which transferred data was created.

Additionally, the third method of embedding information serving as index is the case in which "Auto Save File (Window Title Type) " under "Save Under" in Fig. 22 is checked; in this case, file names of text data or image files to be stored in the file system are created from titles of windows handled by Windows.

Moreover, the fourth method of embedding information serving as index is the case in which "New File Name Every Time" under "Save Under" in Fig. 22 is checked; in this case, the user is asked a file name under which data is stored in the file system after data to be transferred is created and file name is created according to that file name.

Additionally, the fifth method of embedding information serving as index is the case in which "Others" under "Save Under" in Fig. 22 is checked; in this case, the user specifies a fixed character string + automatically assigned serial number digits as desired and the transfer program automatically creates file names for the file system based on these settings.

In the description given so far, image data has been covered as data to be transmitted from the PC to the PDA. However, data other than images is also among basic data transmitted from the PC to the PDA. More specifically, such data is text data as discussed above.

Text data is the easiest to handle of all data, whose area is often specifiable through mouse dragging and other operations. This is probably due to reasons such as a system component called the control, available as standard with Windows, offers such a feature or this is a natural consequence in consideration of the user interface and ease of use.

It is possible to convert data into text or basic data and transmit it to the PDA by storing part of data selected with such a system as text data. Specific implementation methods are described below.

With Windows system, a message called WM_COPY is issued during extraction of selected text data. This message is designed to request a processing for copying the selected text data to a shared memory mechanism called the clipboard. This message can be issued from one arbitrary program to another. Use of this message allows extraction of text data selected by other programs.

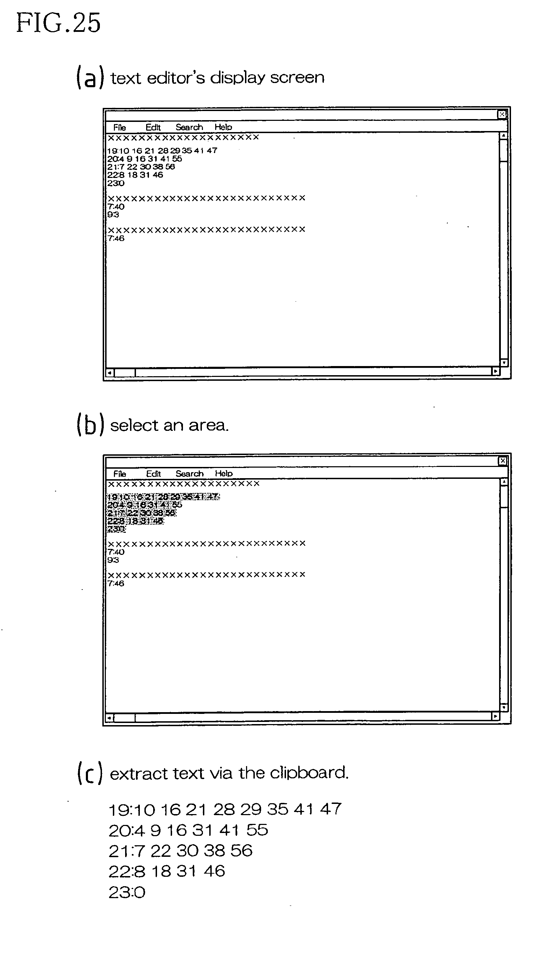

For instance, we assume that a screen as shown in Fig. 25 (a) is displayed in the case shown in Figs. 25 (a) to 25 (c) . Under this condition, when one drags a certain part with the mouse, that part is highlighted in purple, thus resulting in the display state as shown in Fig. 25 (b) . When WM_COPY is used under this condition, text data containing the information shown in Fig. 25 (c) is copied to the clipboard. Extraction of this data allows information to be extracted from application data (data shown in Fig. 25(a)).

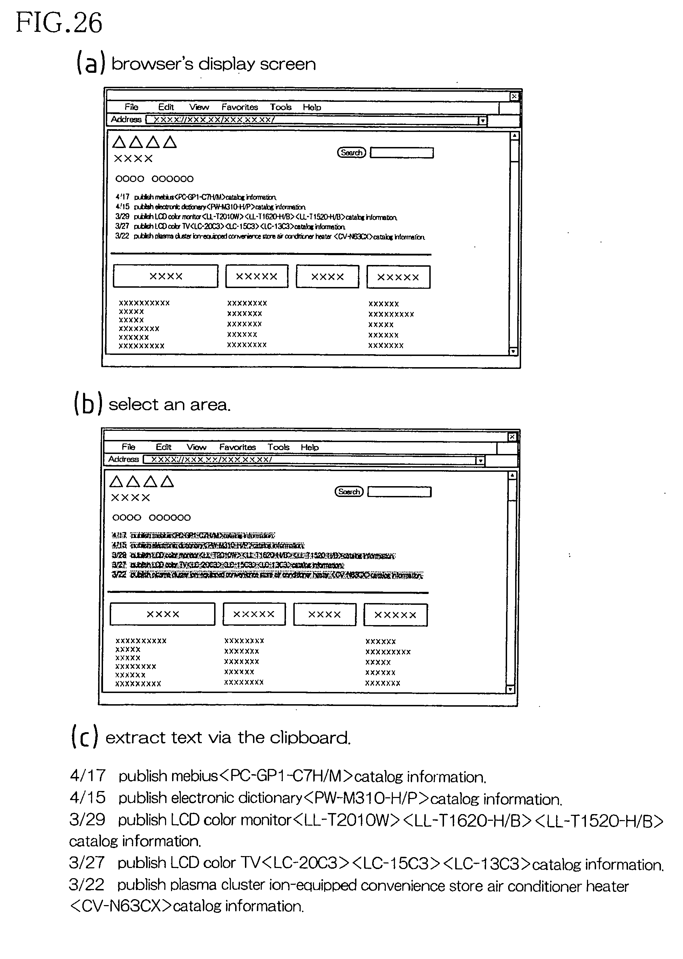

However, not all programs support this message called WM_COPY. Programs which display application data having a data structure which cannot be expressed with standard Windows controls are such examples. Such examples include a browser' s display screen as shown in Fig. 26 (a).

In this case, text data cannot be obtained from the screen display shown in Fig. 26 (a) with WM_COPY even when an area is specified by dragging the mouse. However, there is a case in which text data can be extracted from these programs. That case is when a program is equipped with a processing in which text data is copied to the clipboard as a result of user operation.

The operation for activating this processing is performed by selecting "Copy" from "Menu" or pressing a specific key. Consequently, text data can be extracted if the program is equipped with a processing of copying.

This operation of copying text data to the clipboard is generally often performed by pressing the same key, regardless of which program is used. With Windows, pressing the C key while pressing and holding the Ctrl key corresponds to this operation.

For this reason, it is possible to copy text data selected by the target program to the clipboard during text data extraction by bringing about the same condition as that in which the C key is pressed while pressing and holding the Ctrl key on the processing device 1 rather than by using WM_COPY. Moreover, it is possible to similarly copy text data to the clipboard if Windows is made to recognize that the mouse moved in the same manner as when "Copy" is selected from "Menu. " From this point onward, therefore, data transmission to the PDA using text data as basic data becomes possible by extracting text data from the clipboard and transmitting the text data to the PDA. The result is shown in Fig. 26 (c).

Use of such a method allows text data transmission to the PDA simply by having the user select text and make a transmission request without making available special processings in the program holding application data to be transmitted.

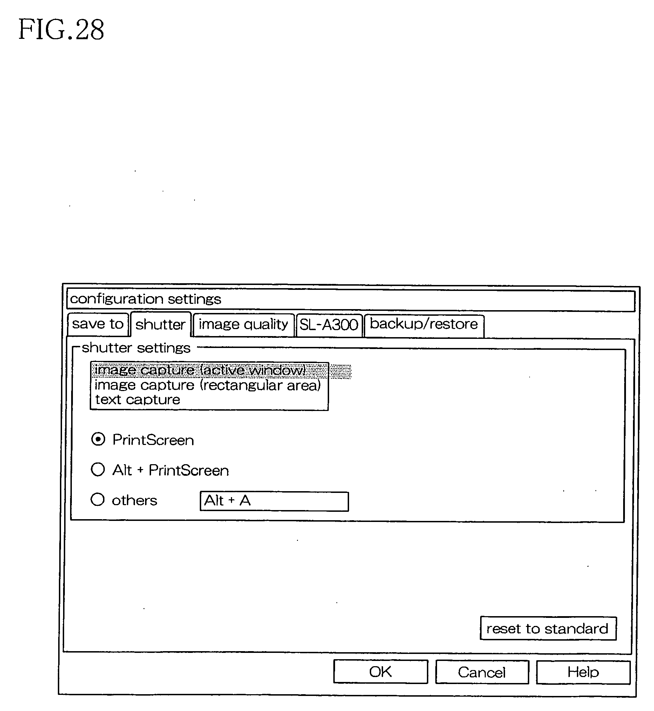

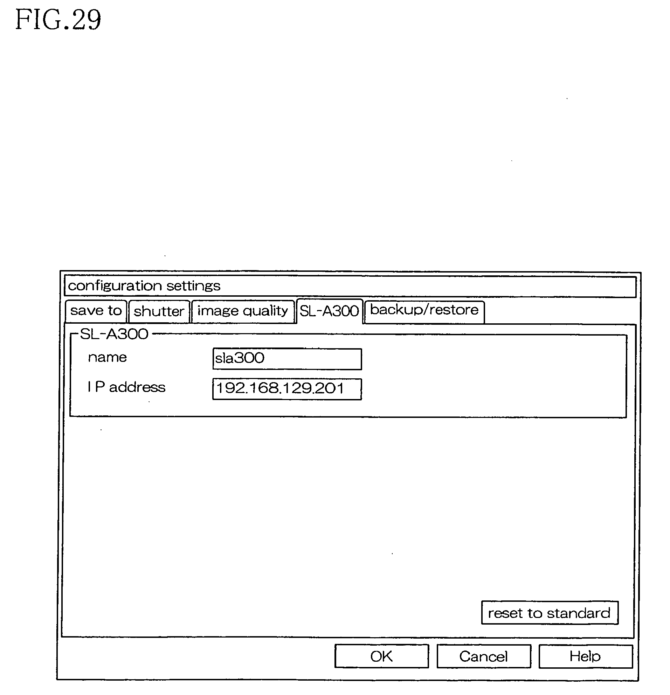

Note that Fig. 28 shows an example of image capture setting screen for extracting image data under the various conditions from the display device 3 of the PC while Fig. 29 an example of IP address setting screen for information equipment with which connection is to be established.

The description of the embodiments was given with particular emphasis on processings on the PC; from this point onward, however, processings on the PDA are mainly discussed.

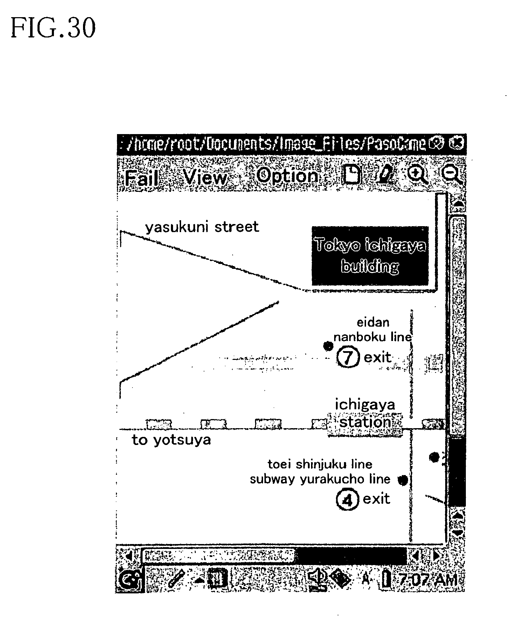

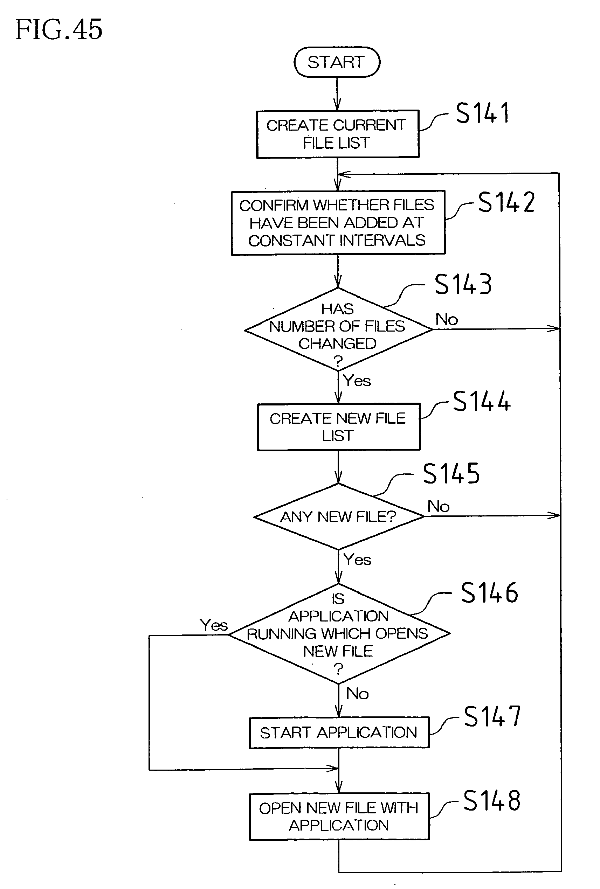

Since the PC and the PDA are not always connected, a processing is performed on the PDA to indicate completion of transmission such as producing a tone or displaying data transmitted from the PC as shown in Fig. 30. This processing is described below by referring to the flowchart shown in Fig. 45.

Here, a system is employed in which the PDA functions as a file server for the PC and files are written to the PDA's file system for data transmission from the PC to the PDA. The case in which a transmitted file is displayed on the display device 8 of the PDA under this condition is described.

First, a list of files in directories to which files may be written is created on the PDA (Step S141). Under this condition, addition of files is monitored at constant time intervals (Step S142).

Through monitoring, change in the number of files is confirmed (Step S143). As a result, if the number of files remains unchanged (if No is answered in Step S135), the operation returns to Step S142, under the assumption that there are no new files, where addition of files is monitored at constant time intervals.

On the other hand, when the number of files has changed (when Yes is answered in Step S143), a new file list is created for use during next monitoring, under the assumption that there may be new files added from the PC (Step S144). Additionally, the previous file list prepared in advance is compared with the current files to confirm whether any new files have been added (Step S145).

As a result of confirmation of the file lists, if no new files have been added (if No is answered in Step S145), the operation returns to Step S142 where addition of files is monitored again at constant time intervals.

As a result of confirmation of the file lists, when a new file has been added (when Yes is answered in Step S145), a confirmation is made as to whether the application which opens that file is currently running (Step S146), and if it is not running, the application which opens that file is activated (Step S147) and the file is opened by passing the file name of the added file to the application (Step S148), thus displaying the data transmitted from the PC on the PDA.

On the other hand, when the application which opens that file is found to be already running as a result of judgment in Step S146, the file is opened by passing the file name of the added file to the existing application rather than activating an application afresh (Step S148), thus displaying the data transmitted from the PC on the PDA.

Monitoring itself runs independently of other applications. For this reason, monitoring is executed again without waiting for the application for displaying the data transmitted from the PC to be exited.

Execution of such a processing allows the PDA, which has received the data created by the PC, to inform the user that data reception is complete and examine the contents of received data.

Here, a case in which folders are changed for storing image data and text data is described.

The PDA which has received data from the PC stores that data on the storage device 9 of the PDA as necessary. These pieces of stored data make it difficult to find the target one as their number increases. For this reason, files are generally managed using folders.

Storing all data transmitted from the PC in the same folder on the PDA results in inconveniences such as difficulty involved in finding the target file through user operations due to existence of a large number of files and long processing time required for file list creation as a result of many pieces of data to be listed. To revolve these problems, folders are switched when files from the PC are stored on the PDA.

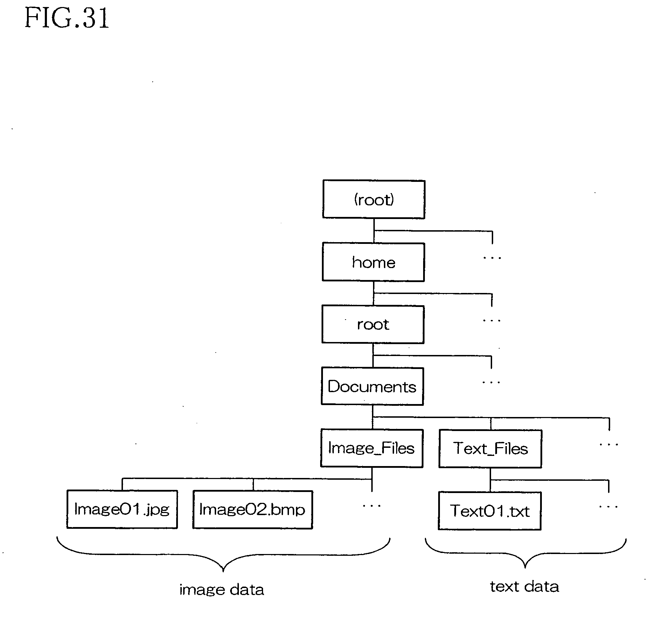

More specifically, folders structured, for example, as shown in Fig. 31 are made available, and when data to be stored is image data, it is stored in a folder named Image_Files while when data to be stored is text data, it is stored in a folder called Text_Files. Moreover, as another example, folders may be changed, for example, according to data transmission dates as in 2002.06.03 and 2002.06.04. Realization of such means allows limitation of the number of files stored in one folder, thus resolving the problems, that is, difficulty involved in finding the target file and long processing time required for file list creation.

Incidentally, a trigger for extracting data from the display device 3 of the PC need not be a user operation obtained from the input device 2 of the PC. For example, there is a possibility that data may be extracted from the display device 3 of the PC as a result of an operation of the input device 7 of the PDA.

Pressing the cradle button or touching a button on the display device 8 with the tablet are among specific operations in this case. The processing in this case is described below. Note, however, that we assume that the PDA is connected to the PC as a file server.

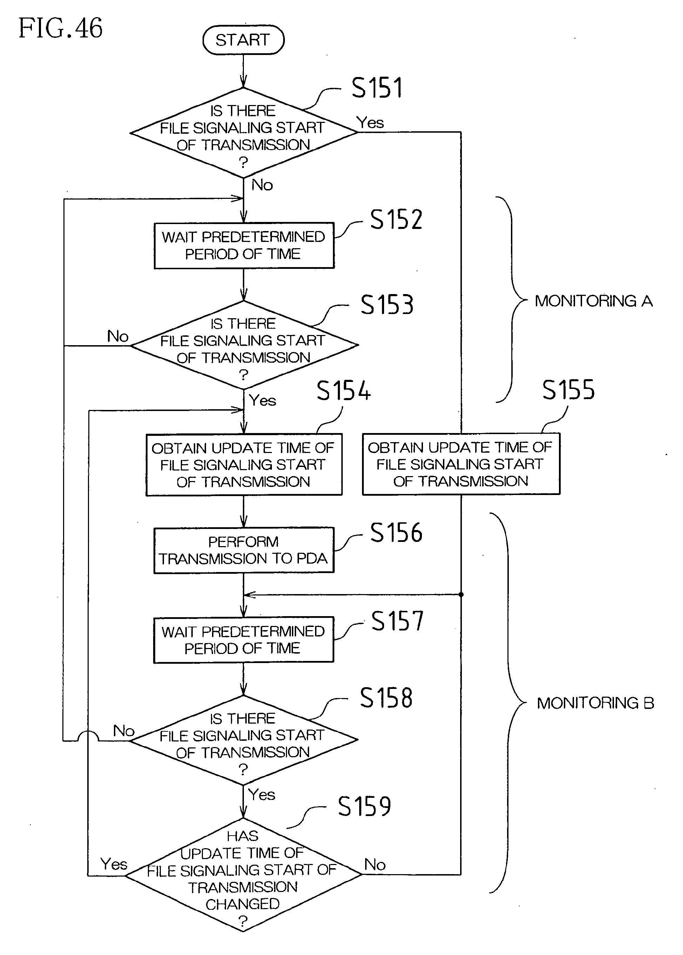

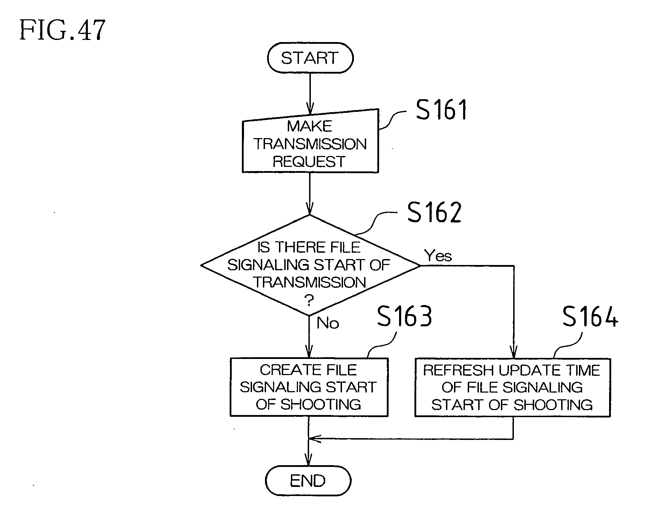

The PDA functions as a file server, and an instruction from the PDA is given in the form of a file existing on the storage device 8 of the PDA (hereafter instruction file). Whether any instruction is given by the user on the PDA is recognized by monitoring such an instruction file. This processing flow is described by referring to the flowcharts showing the processings on the PC and the PDA respectively in Figs. 46 and 47.

If we assume that the user instructs the input device 7 of the PDA to transmit data from the display device 3 of the PC to the PDA (Step S161), the PDA confirms whether the instruction file already exists (Step S162) . As a result, if no instruction file exists, the PDA creates a file (Step S163). On the other hand, when a file exists, the PDA updates the instruction file' s time stamp (Step S164) . The PDA executes the processing each time the user gives an instruction for transmission.

On the other hand, the PC monitors an instruction file on the PDA and performs processings. It is impossible for the PC to predict when an instruction file is created on the PDA and when it is deleted. For this reason, the PC performs processings which allow it to function properly, regardless of when an instruction file is created and deleted. Additionally, there is a possibility that files may not be writable when two different systems are connected and run. To revolve this problem, the processings are designed to be completed on the PC by simply loading files. Moreover, the equivalent processing can be performed, for example, by monitoring the change in file contents in addition to file time stamp as a way of monitoring the file state on the PDA. Note, however, that a case, in which file time stamp is monitored to inform the PC of issuance of transmission request on the PDA, is described here as a simple example.

The transmission program running on the PC confirms whether an instruction file exists on the PDA first (Step S151) if it can recognize the PDA as a file server. The confirmation at this point in time is simply designed to examine the PDA state and select monitoring and does not initiate transmission regardless of the state of the instruction file.

As a result of this confirmation, if an instruction file does not exist (if No is answered in Step S151), the operation proceeds to a monitoring A while when an instruction file exists (when Yes is answered in Step S151), the operation proceeds to a monitoring B.

Here, the monitoring A is described first.

This monitoring A is performed at constant time intervals (Step S152), and only a confirmation as to whether an instruction file exists is made at this time (Step S153). As a result, when existence of an instruction file is confirmed (when Yes is answered in Step S153), since this file signals start of transmission, the new time stamp of the instruction file is stored first (Step S154) and then on-screen data is transmitted from the PC (Step S155). On the other hand, if existence of an instruction file cannot be confirmed in Step S153, the operation returns to Step S152 where a confirmation is made at constant time intervals as to whether an instruction file exists. When its existence is confirmed, the operation proceeds from the monitoring A to the monitoring B which will be explained next.

The item monitored in the monitoring B is the instruction file's time stamp rather than existence of the file. That is, change in the instruction file's time stamp is assumed to be a transmission request from the user in the monitoring B.

First, the current time stamp of the instruction file is stored immediately after the processing enters the monitoring B (Steps S154 and S155) . And, after a predetermined period of time elapses (Step S157), monitoring of the instruction file is performed.

In the monitoring B as in the monitoring A, a confirmation is made as to whether an instruction file exists (Step S158). As a result, if existence of an instruction file cannot be confirmed (if No is answered in Step S158), since time stamps cannot be compared, the operation returns to Step S152 where it switches from the monitoring B to the monitoring A. This means that the transmission program running on the PC has confirmed that an instruction file had been created on the PDA and deleted later. That is, if an instruction file is created from this point onward, this indicates that the user has made a transmission request on the PDA.

On the other hand, when existence of an instruction file is confirmed in the monitoring B (when Yes is answered in Step S158), the instruction file' s time stamp is obtained and compared with the stored time stamp (Step S159). As a result, if the time stamp remains unchanged (if No is answered in Step S159), since this indicates that the user has not made any transmission request, the operation returns to Step S157 where monitoring of an instruction file is performed again after a predetermined period of time elapses.

On the other hand, when the time stamp has changed (when Yes is answered in Step S159), since this indicates that the user has made a transmission request, the operation returns to Step S154 where the instruction file' s time stamp is stored first and then on-screen data is transmitted from the PC (Step S156).

Repetition of the monitorings A and B discussed above allows a transmission start request to be conveyed from the input device 7 of the PDA to the PC without using file write on the PDA.

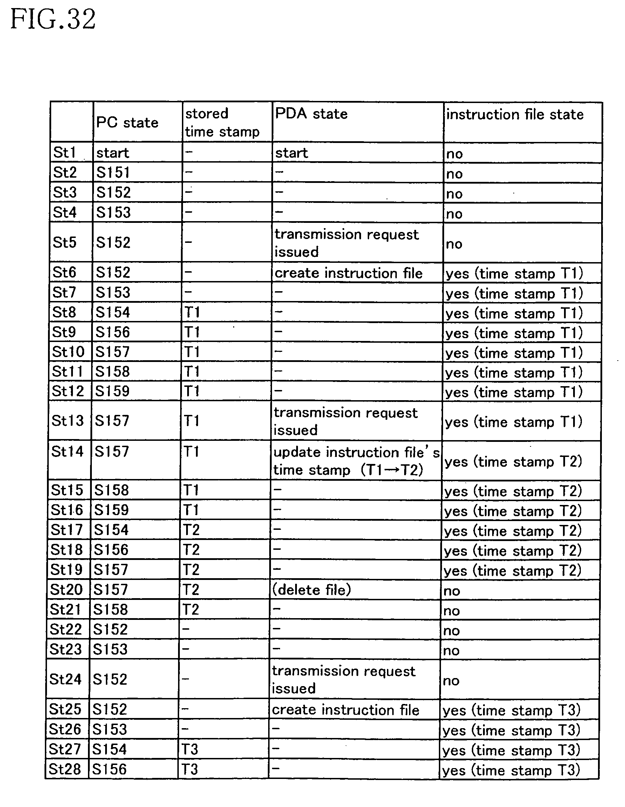

Fig. 32 illustrates an explanatory diagram showing the PC and PDA state changes when a transmission request is conveyed from the PDA to the PC using the monitorings A and B. S151 to S159 under "PC state" in the figure correspond to the steps in Fig. 46. A detailed description is given below by referring to this explanatory diagram.

First, we assume that no instruction file exists in the initial state (St1) on the PDA. When establishment of connection is confirmed with the PDA, a confirmation is made first as to whether an instruction file exists on the PDA's file system (St2).

In this case, since no instruction file exists, the monitoring A is performed after a predetermined period of time (St3). After a predetermined period of time elapses, a confirmation is made as to whether an instruction file exists on the PDA (St4). Since no instruction file exists in this stage, a predetermined period of time is waited again. We assume that a transmission request is issued on the PDA during this predetermined period of time (St5). Since a transmission request is issued, the PDA confirms whether an instruction file exists. In this case, since no instruction file exists, an instruction file is created at this point in time (St6).

Here, the PC's transmission program confirms again whether an instruction file exists after a predetermined period of wait time (St7). Since an instruction file exists at this time, the program stores a time stamp T1 of the instruction file (St8) . Then, the program extracts on-screen data from the display device 3 of the PC and transmits it to the PDA (St9). Additionally, since existence of an instruction file has been confirmed, the operation proceeds to the monitoring B where the program waits a predetermined period of time (St10).

After a predetermined period of time, a confirmation is made as to whether an instruction file exists by the monitoring B (St11) . In this example, since existence of an instruction file has been confirmed, the time stamp (T1) is read for comparison (St12). In this case, since the time stamp is the same as the stored one (T1), a predetermined period of time is waited again.

In this example, we assume that a transmission request is issued on the PDA during this period (St13). Since an instruction file already exists at this time, the PDA updates the time stamp of the instruction file (T1 -> T2) (St14).

Then, the PC confirms again whether an instruction file exists after a predetermined period of wait time (St15) using the monitoring B. In this case, since an instruction file exists, the PC next confirms the time stamp of the instruction file (St16).

In this case, since the time stamp has been updated, the PC's transmission program confirms that a transmission request has been issued on the PDA. That is, the time stamp of the instruction file is stored first (St17). Next, transmission is performed based on the transmission request (St18). Then, the monitoring B is performed after a predetermined period of time (St19).

We assume that a condition such as deletion of the instruction file from the PDA arises at this time (St20). Then, when a confirmation is made again as to whether an instruction file exists using the monitoring B after a predetermined period of wait time, the processing switches to the monitoring A from the next time to perform monitoring since no instruction file exists.

That is, a predetermined period of time is waited first (St22). Then, a confirmation is made as to whether an instruction file exists (St23). Since no instruction file exists, a predetermined period of time is waited. We assume that a transmission request is issued on the PDA at this time (St24). In this case, since no instruction file exists on the PDA, an instruction file is created (St25). When a predetermined period of wait time ends, a confirmation is made as to whether an instruction file exists (St26). In this case, since an instruction file has been created, the PC' s transmission program confirms that a transmission request has been made and first stores the time stamp of the instruction file (St27) and performs transmission (St28).

Thus, a transmission request issued on the PDA is conveyed to the PC according to the flow.

Incidentally, with the embodiment, data exchange between the PC and the PDA is accomplished by a physical cable connecting them, however, in addition to this, data exchange between the PC and the PDA can be accomplished by conveying signals in a wireless manner. Further, data exchange can also be accomplished by passing a nonvolatile memory commonly usable for both the PC and PDA such as CF memory card.

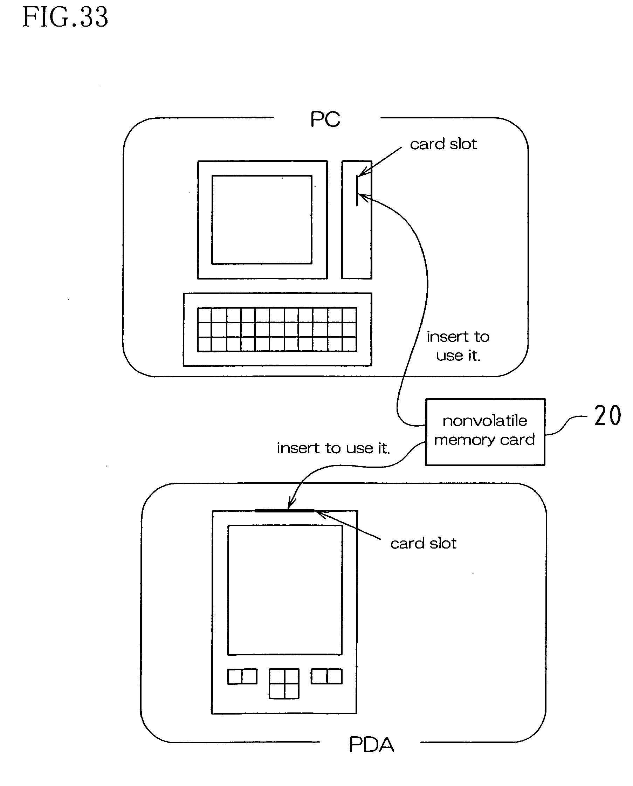

Fig. 33 illustrates an example of device configuration when CF memory card is used as transmission means.

In this case, the data to be transmitted to the PDA is, for example, stored in the file system of a memory card 20 as a file rather than transmitting it over a cable or wirelessly. Using this memory card 20 by its insertion into the PDA results in data transmission from the PC to the PDA. Manipulation of data transmitted in the form of a file stored in the memory card 20 on the PDA allows transmission of the PC' s on-screen data to the PDA.

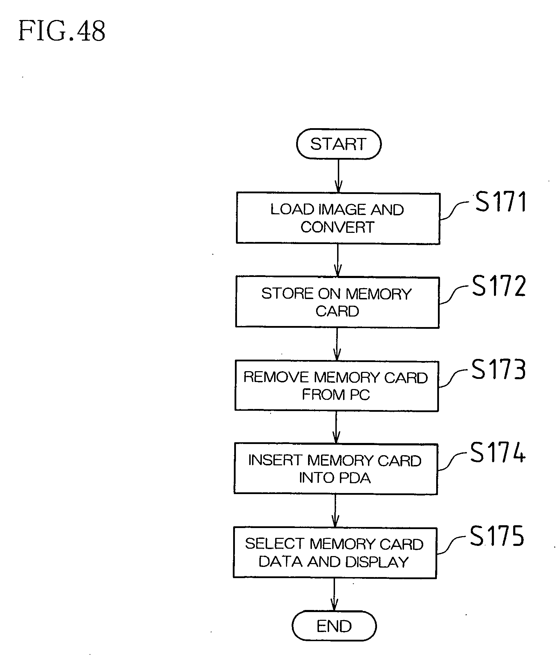

Fig. 48 illustrates the processing flow at that time.

That is, the PC extracts on-screen data and converts it into a data format manipulatable by the PDA (Step S171) when a request is issued for on-screen data transmission to the PDA. The data created here is stored on the memory card 20 (Step S172) . Storage of this data as a file in the file system provided on the memory card 20 is among possible storage methods.

The memory card 20 storing on-screen data is taken out of the PC (Step S173) and fitted into the PDA (Step S174) . And, the data is extracted from the memory card 20 fitted into the PDA and displayed through user operations (Step S175).

Such processings allow data transmission from the PC to the PDA using the memory card 20 as a medium.

Note that the embodiment is described with the wording "converting on-screen data extracted from the PC into a format manipulatable by the PDA." Here, the word "conversion" is defined.

The word "conversion" here refers to making data usable by the PDA. For example, when data displayed on the PC is already a file in JPEG format and when it is to be transmitted to the PDA also in JPEG format, there is a case in which the actual data to be transmitted is completely the same file as that manipulated on the PC. Even in this case, however, since data is made usable by the PDA, the word "conversion" is used here in "converting data on the PC into data manipulatable by the PDA." Moreover, since a file used in Word, for example, is actually displayed by combining various types of data, data displayed in the form of text data is included in that data. In this case, even when text data is extracted from the area where data is displayed as text data and transmitted from the PC, since data is made usable by the PDA, the word "conversion" is used in this embodiment in "converting data on the PC into data manipulatable by the PDA."

The information processing system discussed above is realized by a program designed to make data exchange between the information processing apparatus and other information equipment functional.

The subject matter of the present invention may be this program itself or a computer-readable record medium which has stored this program.

With the present invention, this record medium may be a program medium itself including memory needed for the processing device (microcomputer) 1 shown in Fig. 1 to perform processings such as ROM or a program medium which becomes readable by insertion of a record medium into a program reading device provided as an external storage device not shown. With the present invention, the storage device 4 serves as a program medium. In either case, the stored program may be accessed by the microcomputer for execution or read and loaded into a program storage area not shown of the microcomputer for execution. This program to be loaded must be stored in advance on the device's main body.

Here, the program medium is a record medium separable from the main body and may be a tape-based medium such as magnetic or cassette tape, magnetic disk such as FD (flexible disk) or HD (hard disk), optical disk-based medium such as CD-ROM, MO, MD or DVD, card-based medium such as IC card (including memory card), optical card or a medium which holds programs in a stationary manner such as masked ROM, EPROM, EEPROM or flash ROM.

Moreover, with the present invention, since the system configuration in the present invention is connectable to communications networks including the Internet, the program medium may be a medium which holds programs in a mobile manner as that in which programs are downloaded from a communications network. Note that when a program is downloaded from a communications network, that program to be downloaded may be stored in advance on the device's main body or installed from a separate record medium. Note that the contents of storage on the record medium are not limited to programs and may be data.

Further, with the present invention, the program may be the processings themselves performed by the processing device 1 shown in Fig. 1, a program which can be or has been loaded by accessing communications network including the Internet or a program which is to be transmitted. Further, the program may be the result of the processings performed by the information equipment based on the loaded program, that is, final outcome. Or, the program may be the result of the processings performed by the information equipment at the time of transmission, that is, final outcome. Note that these are not limited to programs and may be data.

As described above, according to embodiment 2, it is possible to manipulate application data on information equipment lacking means for directly handling application data by converting application data into basic data using a program capable of manipulating application data. Moreover, when one wishes to extract only character information as basic data, it is possible to do so by bringing about the same condition, using the clipboard provided by Windows, as that in which the C key is pressed while pressing and holding the Ctrl key or in which selection is made from the menu with the mouse, thus allowing basic data transmission to information equipment running on a system different from that of the PDA.

Additionally, according to the present invention, the user can be informed of data reception and immediately confirm the received data contents on other information equipment which has received data.

Next, an embodiment having a similar effect as this embodiment 2 is described.

<Embodiment 3>
This embodiment 3 differs only partially from the embodiment 2 in PC and PDA operational steps. For this reason, the same configurations as in embodiment 2 are used for the PC and the PDA, and the description of these configurations is omitted. Consequently, in this embodiment 3, the configurations different from those of embodiment 2 are described.

This embodiment of the present invention is described below by referring to the drawings.

The PC is comprised of the processing device 1, the input device 2, the display device 3, the storage device 4 and the connection device 5, as shown in Fig. 1.

Moreover, the PDA is comprised of the processing apparatus 6, the input device 7, the display device 8, the storage device 9 and the connection device 10, as shown in Fig. 1.

Unlike the embodiment 2, only image data is used in this embodiment 3.

Next, operational steps of the PC and the PDA different from those in the embodiment 2 are described below.

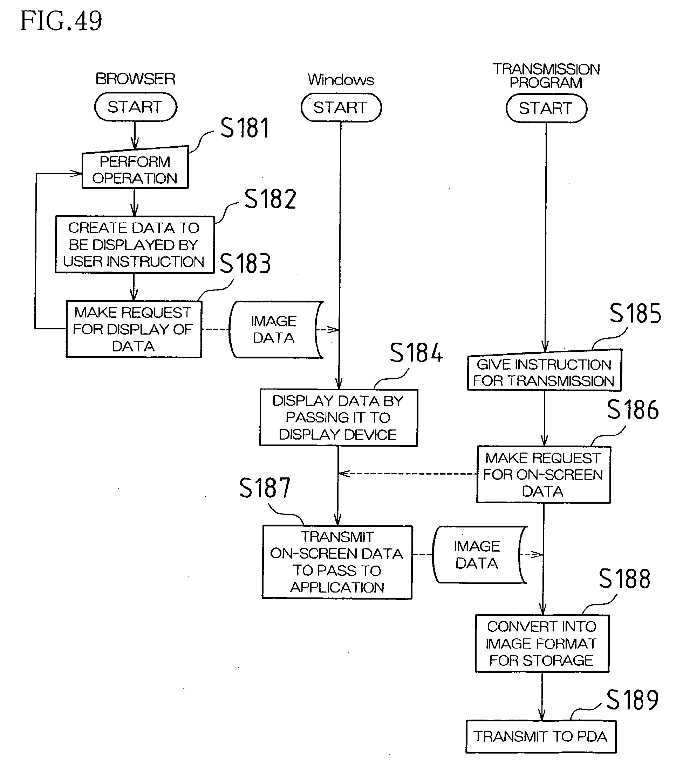

With embodiment 3 of the present invention, a processing example is described as a specific example, by referring to the flowchart shown in Fig. 49, in which data, which will be viewed on the PDA, is created on a Windows-equipped PC from Hypertext containing information such as drawings, text and links indicating references to other documents.

When data is viewed with the PC alone, the processing device 1 interprets and executes the browser read from the storage device 4 or obtained from other equipment via the connection device 5.

That is, user instructions such as where it should be displayed within the whole and which link to follow are obtained from the input device 2.

For example, when the PC runs using a window system, there is a case in which all information is not displayed within the window area. In this case, the area to be displayed, that is, the area from which data is to be extracted is specified by manipulating the input device 2 such as the scroll bar or mouse.

Based on such user instructions, Hypertext stored on the storage device 4 or Hypertext obtained from other equipment through the connection device 5 via a connection network such as the Internet (refer to Fig. 12) is processed into a human-viewable form (Step S182) .

This processed data is passed to Windows once (Step S183) and displayed on the display device 3 in the form as shown in Fig. 13 (Step S184).

Here, we assume that the operation "Transmit to the PDA" is obtained from via the input device 1 (Step S185).

In response to this operation, the transmission program requests that Windows obtain one page of on-screen data (substantially one page of the on-screen data) which is currently displayed (Step S186) .

Windows passes the requested area of image data to the transmission program (Step S187).

The transmission program converts the obtained data into an image format (e.g., JPEG, DIB) suitable for storage on the PDA (Step S188) and transmits it to the PDA (Step S189). Here, it is possible for the PC to produce a tone indicating completion of transmission.

The PDA performs processings according to processings predetermined on the PDA such as storing the received data on the storage device 9 or displaying it on the display device 8 without storing it.

Execution of such a series of processings makes it possible to convert application data manipulated by the sender's program into basic data and transmit it to the PDA without performing any special processing on the sender' s program and also display Hypertext even on a PDA not supporting Hypertext as long as the PDA can display images.

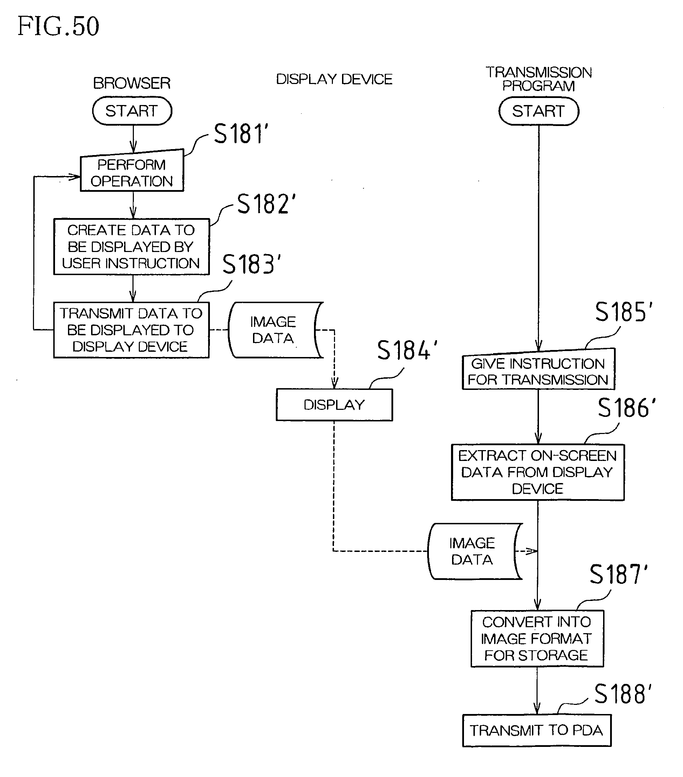

Note that although Windows is requested to obtain on-screen data in Step S186 in the specific example, the similar effect can be obtained by extracting data from the display device 3 and transmitting the data to the PDA.
In this case, the processing procedure shown in Fig. 50 is used. That is, this example represents a case in which the display device 3 and individual programs directly exchange on-screen data without using Windows.

That is, user instructions are obtained from input device 1 in Step S181' by the same means as in the earlier Step S181. In the next Step S182', data to be displayed is created by the same means as in the earlier Step S182.

Next, although Windows is requested to transmit data in the earlier Step S183, the display device 3 is instructed to directly display data in this Step S183'. The display device 3 displays data according to this instruction (Step S184').

If the transmission program receives an instruction under this condition to transmit data to the PDA by the same means as in the earlier Step S185 (Step S185'), the transmission program obtains on-screen data from the display device 3 according to this instruction (Step S186').

In the next Step S187', the obtained data is converted into an image format (e.g., JPEG, DIB) manipulatable by the PDA as in the earlier Step S188 and transmitted to the PDA (Step S188').

Note that operational steps other than those of the PC and the PDA are the same as those of the PC and the PDA in the embodiment 2. For this reason, their description is omitted.

As described above, according to the present invention, it is possible to manipulate application data on information equipment lacking means for directly handling application data by converting application data into basic data and transferring it using a program capable of manipulating application data.

Additionally, according to the present invention, the user can be informed of data reception and immediately confirm the received data contents on other information equipment which has received data.

It is to be noted that this application is based on Japanese Patent Application Nos. 2002-181387, 2002-181388 and 2002-181389 filed in Japan, of which full contents are incorporated herein by reference. Moreover, the individual documents cited in this specification are wholly and specifically incorporated herein by reference.

## Claims

1. An information processing apparatus capable of transmitting image data to other information equipment, comprising:
extraction means for extracting on-screen image data; and
transmission means for converting extracted image data into a format manipulatable by said other information equipment and transmitting the converted image data to said other information equipment.

2. An information processing apparatus according to claim 1, further comprising: selection means for selecting a piece of image data from among a plurality of pieces of image data displayed on the display screen, for extraction by said extraction means.

3. An information processing apparatus according to claim 1, further comprising: area specification means for specifying a display screen area from which image data is to be extracted by said extraction means.

4. The information processing apparatus according to claim 3, wherein said area specification means perform area specification by specifying start to end positions for extraction of image data.

5. An information processing apparatus according to claim 3, wherein said area specification means specify a rectangular area with a fixed height and width having its starting point at an arbitrary position by specifying said arbitrary position on the image data.

6. The information processing apparatus according to any one of claims 1 to 3, comprising detection means for detecting whether connection is established with said other information equipment, wherein when no connection is established with said other information equipment, image data extraction by said image data extraction means is stopped, and wherein image data transmission to other information equipment by said transmission means is withheld.

7. The information processing apparatus according to any one of claims 1 to 3, further comprising image data storage means for storing image data; and detection means for detecting whether connection is established with said other information equipment, wherein when no connection is established with said other information equipment, image data extracted by said image data extraction means is stored on said image data storage means, and wherein when said detection means detect that connection is established with other information equipment, image data stored on said image data storage means is read and then converted by said transmission means into a format manipulatable by said other information equipment, for transmission to said other information equipment.

8. The information processing apparatus according to any one of claims 1 to 3, further comprising image data storage means for storing image data; and detection means for detecting whether connection is established with said other information equipment, wherein when no connection is established with said other information equipment, image data extracted by said image data extraction means is converted into a format manipulatable by said other information equipment and stored on said image data storage means, and wherein when said detection means detect that connection is established with other information equipment, image data stored on said image data storage means is read and then transmitted by said transmission means to said other information equipment.

9. The information processing apparatus according to any one of claims 6 to 8, further comprising display means for showing whether connection is established with said other information equipment.

10. The information processing apparatus according to claim 7, further comprising confirmation means for confirming whether image data is to be transmitted to said other information equipment, wherein when said detection means detect that connection is established with other information equipment, said confirmation means confirm whether to transmit image data, and wherein when, as a result of confirmation, data is to be transmitted, image data stored on said image data storage means is read and then converted by said transmission means into a format manipulatable by said other information equipment, for transmission to said other information equipment.

11. The information processing apparatus according to claim 8, further comprising confirmation means for confirming whether image data is to be transmitted to said other information equipment, wherein when said detection means detect that connection is established with other information equipment, said confirmation means confirm whether to transmit image data, and when, as a result of confirmation, data is to be transmitted, image data stored on said image data storage means is read and then transmitted by said transmission means to said other information equipment.

12. The information processing apparatus according to claim 7, further comprising confirmation means for confirming whether image data is to be transmitted to said other information equipment, wherein when no connection is established with said other information equipment at the time of transmission request, said confirmation means confirm whether to transmit image data after establishment of connection, and wherein when, as a result of confirmation, data is to be transmitted after establishment of connection, image data extracted by said image data extraction means is stored on said image data storage means.

13. The information processing apparatus according to claim 8, further comprising confirmation means for confirming whether image data is to be transmitted to said other information equipment, wherein when no connection is established with said other information equipment at the time of transmission request, said confirmation means confirm whether to transmit image data after establishment of connection, and wherein when, as a result of confirmation, data is to be transmitted after establishment of connection, image data extracted by said image data extraction means is converted into a format manipulatable by said other information equipment and stored on said image data storage means.

14. The information processing apparatus according to claim 12 or 13, further comprising display means for showing that there is untransmitted image data stored on said image data storage means.

15. The information processing apparatus according to any one of claims 1 to 3, further comprising date information attachment means for attaching date information to image data extracted by said image data extraction means, wherein said transmission means transmit extracted image data and attached date information to other information equipment.

16. The information processing apparatus according to claim 7, 8, 10, 11, 12 or 13, further comprising date information attachment means for attaching date information to image data extracted by said image data extraction means, wherein said image data storage means store extracted image data and attached date information.

17. The information processing apparatus according to any one of claims 1 to 3, further comprising title information attachment means for attaching index title information to image data extracted by said image data extraction means, wherein said transmission means transmit extracted image data and attached title information to other information equipment.

18. The information processing apparatus according to claim 7, 8, 10, 11, 12 or 13, further comprising title information attachment means for attaching index title information to image data extracted by said image data extraction means, wherein said image data storage means store extracted image data and attached title information.

19. The information processing apparatus according to any one of claims 1 to 3, further comprising index information attachment means for arbitrarily attaching index information to image data extracted by said image data extraction means, wherein said transmission means transmit extracted image data and attached index information to said other information equipment.

20. The information processing apparatus according to claim 7, 8, 10, 11, 12 or 13, further comprising index information attachment means for arbitrarily attaching index information to image data extracted by said image data extraction means, wherein said image data storage means store extracted image data and attached index information.

21. The information processing apparatus according to any one of claims 1 to 3, further comprising condition addition means for adding image data extraction conditions to image data extracted by said image data extraction means, wherein said transmission means transmit extracted image data and added conditions to said other information equipment.

22. The information processing apparatus according to claim 7, 8, 10, 11, 12 or 13, further comprising condition addition means for adding image data extraction conditions to image data extracted by said image data extraction means, wherein said image data storage means store extracted image data and added conditions.

23. The information processing apparatus according to any one of claims 1 to 3, further comprising storage location specification means for specifying a storage location of other information equipment for storing image data extracted by said image data extraction means, wherein said transmission means transmit extracted image data and data indicating the specified storage location to said other information equipment.

24. The information processing apparatus according to claim 7, 8, 10, 11, 12 or 13, further comprising storage location specification means for specifying a storage location of other information equipment for storing image data extracted by said image data extraction means, wherein said image data storage means store extracted image data and data indicating the specified storage location.

25. The information processing apparatus according to any one of claims 1 to 3, further comprising storage format specification means for specifying a format for storing image data extracted by said image data extraction means, wherein said transmission means transmit extracted image data and data indicating the specified storage format to said other information equipment.

26. The information processing apparatus according to claim 7, 8, 10, 11, 12 or 13, further comprising storage format specification means for specifying a format for storing image data extracted by said image data extraction means, wherein said image data storage means store extracted image data and data indicating the specified storage format.

27. The information processing apparatus according to any of claims 1 to 3, further comprising storage format specification means for specifying a format for storing image data extracted by said image data extraction means; and compression ratio setting means for setting a compression ratio if the specified storage format is compressible, wherein said transmission means transmit image data extracted at the set compression ratio and data indicating the specified storage format to said other information equipment.

28. The information processing apparatus according to claim 7, 8, 10, 11, 12 or 13, further comprising storage format specification means for specifying a format for storing image data extracted by said image data extraction means; and compression ratio setting means for setting a compression ratio if the specified storage format is compressible, wherein said image data storage means store image data extracted at the set compression ratio and data indicating the specified storage format.

29. The information processing apparatus according to any one of claims 1 to 3, wherein said transmission means are a storage medium, and wherein image data is transmitted by passing said storage medium from said information processing apparatus to said other information equipment.

30. An information processing apparatus capable of transmitting text data to other information equipment, comprising:
text data extraction means for extracting text data from display screen's on-screen data;
text data storage means for storing extracted text data; and
transmission means for extracting text data by said text data extraction means through selection of said display screen's on-screen data, storing the text data on said text data storage means and transmitting the text data to said other information equipment.

31. The information processing apparatus according to claim 30 further comprising:
area specification means for specifying an area of on-screen data from which text data is to be extracted by said text data extraction means.

32. The information processing apparatus according to claim 30 or 31, wherein said text data extraction means extract text data including Hypertext data if said on-screen data contains Hypertext data.

33. The information processing apparatus according to claim 30 or 31, wherein said text data extraction means extract text data using the clipboard and store the text data on said text data storage means.

34. The information processing apparatus according to claim 31, wherein said area specification means perform area specification by specifying start to end positions for extraction of on-screen data.

35. The information processing apparatus according to claim 31, wherein said area specification means specify a rectangular area with a fixed height and width having its starting point at an arbitrary position by specifying said arbitrary position on on-screen data.

36. The information processing apparatus according to claim 30 or 31, comprising detection means for detecting whether connection is established with said other information equipment, wherein when no connection is established with said other information equipment, text data extracted by said text data extraction means is stored on said text data storage means, and wherein when said detection means detect that connection is established with other information equipment, text data stored on said text data storage means is read and then transmitted by said transmission means to said other information equipment.

37. The information processing apparatus according to claim 30 or 31, further comprising date information attachment means for attaching date information to text data extracted by said text data extraction means, wherein said transmission means transmit extracted text data and attached date information to other information equipment.

38. The information processing apparatus according to claim 30 or 31, further comprising title information attachment means for attaching title information to text data extracted by said text data extraction means, wherein said transmission means transmit extracted text data and attached title information to other information equipment.

39. The information processing apparatus according to claim 30 or 31, further comprising index information attachment means for attaching index information to text data extracted by said text data extraction means, wherein said transmission means transmit extracted text data and attached index information to said other information equipment.

40. The information processing apparatus according to claim 30 or 31, further comprising condition addition means for adding text data extraction conditions to text data extracted by said text data extraction means, wherein said transmission means transmit extracted text data and data indicating added conditions to said other information equipment.

41. The information processing apparatus according to claim 30 or 31, further comprising storage location specification means for specifying a storage location for storing text data extracted by said text data extraction means, wherein said transmission means transmit extracted text data and data indicating the specified storage location to said other information equipment.

42. The information processing apparatus according to claim 30 or 31, wherein said transmission means are a storage medium, and wherein text data is transmitted by passing this storage medium from said information processing apparatus to said other information equipment.

43. Other information equipment capable of receiving image data transmitted from an information processing apparatus after conversion into a manipulatable format, comprising:
reception means for receiving said image data;
storage means for storing image data received by said reception means;
detection means for detecting reception of image data by said reception means; and
display means for displaying image data detected by said detection means.

44. The information equipment according to claim 43, wherein said detection means detect whether image data has been received based on change in the number of files stored in said storage means.

45. The information equipment according to claim 43, wherein said storage means store image data received by said reception means in the specified folder.

46. The information equipment according to claim 43, wherein said storage means store image data received by said reception means in the folder specified by file format.

47. Other information equipment capable of receiving text data transmitted from an information processing apparatus, comprising:
reception means for receiving said text data;
storage means for storing text data received by said reception means;
detection means for detecting reception of text data by said reception means; and
display means for displaying text data detected by said detection means.

48. The information equipment according to claim 47, wherein said detection means detect whether text data has been received based on change in the number of files stored in said storage means.

49. An information processing system comprised of an information processing apparatus and other information equipment capable of receiving image data transmitted from said information processing apparatus after conversion into a manipulatable format, wherein
said other information equipment comprises instruction means for instructing said information processing apparatus to receive said image data, and wherein
said information processing apparatus comprises transmission means for transmitting said image data to said other information equipment based on the instruction from said instruction means.

50. An information processing system comprised of an information processing apparatus and other information equipment capable of receiving text data transmitted from this information processing apparatus, wherein
said other information equipment comprises instruction means for instructing said information processing apparatus to receive said text data, and wherein
said information processing apparatus comprises transmission means for transmitting said text data to said other information equipment based on the instruction from said instruction means.

51. A data transmission method for transmitting image data from an information processing apparatus to other information equipment, comprising the steps of:
extracting image data from the display screen in response to a transmission request;
converting extracted image data into a format manipulatable by other information equipment; and
transmitting converted image data.

52. The data transmission method according to claim 51, comprising the further step of: selecting a piece of image data from among a plurality of pieces of image data displayed on the display screen for extraction in said extracting step in response to the transmission request.

53. The data transmission method according to claim 51, comprising the further step of:
specifying a display screen area from which image data is to be extracted in said extracting step in response to a transmission request.

54. The data transmission method according to claim 51, comprising the further steps of: specifying a display screen area from which image data is to be extracted in said extracting step;
storing image data converted in said converting step on image data storage means; and
reading image data stored on the image data storage means for transmission in said transmitting step, in response to a transmission request.

55. The data transmission method according to claim 51, comprising the further steps of:
detecting whether connection is established with said other information equipment;
storing the converted image data on image data storage means when no connection is established with other information equipment; and
reading said image data stored on image data storage means for transmission in said transmitting step when establishment of connection with other information equipment is detected.

56. The data transmission method according to claim 51, comprising the further steps of:
detecting whether connection is established with said other information equipment;
storing said converted image data on image data storage means when no connection is established with other information equipment;
confirming whether to transmit image data when establishment of connection with other information equipment is detected; and
reading image data stored on image data storage means for transmission in said transmitting step if image data is to be transmitted as a result of confirmation.

57. The data transmission method according to claim 51, comprising the further steps of:
detecting whether connection is established with said other information equipment;
confirming whether to store the converted image data on image data storage means when no connection is established with other information equipment;
storing said converted image data on image data storage means if, as a result of confirmation, data is to be stored; and
reading said image data stored on image data storage means and transmitting said image data to other information equipment when establishment of connection with other information equipment is detected.

58. A data transmission method for transmitting text data from an information processing apparatus to other information equipment, comprising the steps of:
extracting text data from the display screen's on-screen data;
storing extracted text data on text data storage means; and
transmitting text data stored on text data storage means to other information equipment.

59. The data transmission method according to claim 58, comprising the further step of: specifying an on-screen data area from which text data is to be extracted in the extracting step.

60. A data reception method for other information equipment to receive image data converted into a manipulatable format from an information processing apparatus, comprising the steps of:
receiving transmitted image data;
storing received image data in a specified folder,
detecting image data reception based on change in the number of files stored in said folder; and displaying the detected image data.

61. A data reception method for other information equipment to receive text data from an information processing apparatus, comprising the steps of:
receiving transmitted text data;
storing received text data in a specified folder,
detecting text data reception based on change in the number of files stored in said folder; and
displaying the detected text data.

62. A computer-readable automatic backup program executed in an information processing apparatus capable of exchanging data with other information equipment, said program being operable to execute the steps of:
detecting whether connection is established with said other information equipment;
deciding the start of automatic backup;
receiving backup data from said other information equipment when automatic backup starts; and
storing received backup data on storage means.

63. A computer-readable data transmission program for transmitting image data from an information processing apparatus to other information equipment, said program being operable to execute the steps of:
extracting image data from the display screen in response to a transmission request;
converting extracted image data into a format manipulatable by other information equipment; and transmitting converted image data.

64. The computer-readable data transmission program according to claim 63, the steps executed by said program comprising the further step of: selecting a piece of image data from among a plurality of pieces of image data displayed on the display screen for extraction in the extracting step, in response to a transmission request.

65. The computer-readable data transmission program according to claim 63, the steps executed by said program comprising the further step of: specifying a display screen area from which image data is to be extracted in said extracting step in response to a transmission request.

66. The computer-readable data transmission program according to claim 63, the steps executed by said program comprising the further steps of:
specifying a display screen area from which image data is to be extracted in said extracting step;
storing the converted image data on image data storage means; and
reading image data stored on image data storage means and for transmission in said step in response to a transmission request.

67. The computer-readable data transmission program according to claim 63, the steps executed by said program comprising the further steps of:
detecting whether connection is established with other information equipment;
storing said converted image data on image data storage means when no connection is established with other information equipment; and
reading said image data stored on image data storage means for transmission in said transmitting step when establishment of connection with other information equipment is detected.

68. The computer-readable data transmission program according to claim 63, the steps executed by said program comprising the further steps of:
detecting whether connection is established with said other information equipment;
storing said converted image data on image data storage means when no connection is established with other information equipment;
confirming whether to transmit image data when establishment of connection with other information equipment is detected; and
reading said image data stored on image data storage means for transmission in said transmitting step if image data is to be transmitted as a result of confirmation.

69. The computer-readable data transmission program according to claim 63, the steps executed by said program comprising the further steps of:
detecting whether connection is established with said other information equipment;
confirming whether to store the converted image data on image data storage means when no connection is established with other information equipment;
storing said converted image data on image data storage means if, as a result of confirmation, data is to be stored; and
reading said image data stored on image data storage means and transmitting said image data to other information equipment when establishment of connection with other information equipment is detected.

70. A computer-readable data transmission program for transmitting text data from an information processing apparatus to other information equipment, said program being operable to execute the steps of:
extracting text data from the display screen's on-screen data;
storing extracted text data on text data storage means; and
transmitting text data stored on text data storage means to other information equipment.

71. The computer-readable data transmission program according to claim 70, the steps executed by said program comprising the further step of: specifying an on-screen data area from which text data is to be extracted in the extracting step.

72. A computer-readable data reception program for other information equipment to receive image data transmitted from an information processing apparatus after conversion into a manipulatable format, said program being operable to execute the steps of:
receiving transmitted image data;
storing received image data in a specified folder;
detecting image data reception based on change in the number of files stored in said folder; and
displaying the detected image data.

73. A computer-readable data reception program for other information equipment to receive text data transmitted from an information processing apparatus, said program being operable to execute the steps of:
receiving transmitted text data;
storing received text data in a specified folder;
detecting text data reception based on change in the number of files stored in said folder; and
displaying the detected text data.

74. A computer-readable record medium having thereon recorded a program according to any one of claims 62 to 73.
